# FASCICULE DE BREVET EUROPEEN

(11) **EP 1 376 986 B1**
(45) Date de publication et mention de la délivrance du brevet: **02.03.2005**
(21) Numéro de dépôt: 03101436.8
(22) Date de dépôt: 20.05.2003
(51) Int. Cl.: H04L 29/06

(54) **Procédé de reconstitution de messages acheminés par un ou plusieurs réseaux de transmission par paquets**
Methode zur Rekonstruktion paketisierter Nachrichten, die über ein oder mehrere Netzwerke verschickt wurden
Method of reassembling packetized messages sent over one or more networks

(30) Priorité: 28.05.2002 FR 0206508
(43) Date de publication de la demande: 02.01.2004
(73) Titulaire: Thales, 75008 Paris (FR)
(72) Inventeur: Colas, Gérard, 94117 CX, ARCUEIL (FR); Pitot, Christian, 94117 CX, ARCUEIL (FR)
(74) Mandataire: Brochard, Pascale

(56) Documents cités:
- EP-A- 0 963 082
- DE-A- 10 039 193
- POSTEL J: "RFC 791: Internet Protocol" IETF REQUEST FOR COMMENTS, XX, XX, septembre 1981 (1981-09), pages 1-49, XP002232216
- ZHANG TAO ET AL: "Ip-Based Base Stations and Soft Handoff in All-IP Wireless Networks" IEEE PERSONAL COMMUNICATIONS, IEEE COMMUNICATIONS SOCIETY, US, octobre 2001 (2001-10), pages 24-30, XP000864164 ISSN: 1070-9916

## Description

La présente invention est relative à la reconstitution à l'arrivée dans un équipement, de messages acheminés par fragments, au moyen d'un réseau de transmission de données par paquets, ces messages pouvant être acheminés de manière redondante, par plusieurs réseaux de transmission indépendants pour accroître la sûreté de leur acheminement.

Un réseau de transmission de données par paquets, est constitué d'un maillage de lignes de transmission et de noeuds d'interconnexion reliant des équipements géographiquement dispersés échangeant des messages entre eux. Les paquets, constitués de datagrammes plus ou moins longs, voyagent, de manière asynchrone, sous forme de modulation, sur les lignes de transmission. Ils sont redirigés dans les noeuds d'interconnexion qu'ils traversent jusqu'à parvenir à leur destination. Leurs temps de trajet sont variables et fonction des encombrements des noeuds d'interconnexion au moment où ils les traversent. Ils comportent des données utiles constituant la charge marchande du réseau et des informations de service permettant leur routage au sein du réseau. Il n'est pas rare qu'un message à transmettre soit réparti sur plusieurs paquets. Dans ce cas, les informations de service des paquets renseignent sur leur appartenance à un même message et sur leurs positions relatives au sein de ce message pour permettre la reconstitution du message à destination.

Le document intitulé : "Internet Protocol" édité par Jon Postel RFC 791, Request for Comments (1981-09) pages 1-45 XP002232216, qui décrit la norme du protocol IP (acronyme de l'anglo-saxon "Internet Protocol) établie par le DARPA (acronyme de l'anglo-saxon :Defense Advanced Research Project Agency), donne un exemple de réseau de transmission de données par paquets avec un format de paquets comportant des informations de fragmentation permettant la transmission d'une information en plusieurs paquets successifs et la reconstitution à destination de l'information transmise par réassemblage des paquets.

Le même message fragmenté en paquets, peut, pour des raisons de sécurité, être acheminé, de manière redondante, par plusieurs réseaux de transmission indépendants. II se pose alors le problème de la reconstitution du message à partir des différents paquets le concernant acheminés par les différents réseaux, sachant qu'un même paquet peut parvenir plusieurs fois au même équipement par des voies ou chemins virtuels différents et à des instants proches mais distincts.

Jusqu'à présent, lorsqu'un même message est transmis, segmenté en paquets, à un même équipement, par au moins deux réseaux de transmission indépendants, la mauvaise réception d'un paquet du message sur l'un des réseaux entraîne le rejet de tous les paquets du message acheminés par ce réseau. Cela empêche de reconstituer un message à partir d'une combinaison des paquets acheminés par les deux réseaux de transmission lorsqu'il y a des mauvais acheminements de paquets sur les deux réseaux, même si ces mauvais acheminements ne concernent pas les mêmes paquets sur les deux réseaux.

Un exemple de ce qui se pratique dans la technique est décrit dans l'article de Zhang TAO et al. intitulé : "IP-Based Base Stations and soft Handoff in All-IP Wireless Networks"paru dans IEEE Personnal Communications October 2001, pages 24-30, XP000864164, ISSN : 1070-9916. Dans cet exemple, qui se place dans le cadre particulier de l'utilisation d'internet dans les réseaux cellulaires de transmission radioélectrique et qui concerne la continuité d'une transmission de données dans le cas d'une station mobile changeant de relais, une technique de commutation douce entre relais permet de synchroniser deux voies parallèles de transmission empruntant deux relais différents pour qu'elles n'apparaissent que comme une seule voie au niveau du mobile

La présente invention a pour but de résoudre le problème de la reconstitution d'un message segmenté en paquets acheminés simultanément par deux réseaux de transmission en présence de mauvais acheminement de paquets sur les deux réseaux.. Elle a également pour but un procédé de reconstitution de messages fragmentés en paquets, éventuellement acheminés par un seul réseau de transmission, qui soit facile à mettre en oeuvre en entrée d'un équipement.

Elle a pour objet un procédé de reconstitution de messages fragmentés en paquets, acheminés vers un équipement, par au moins un réseau de transmission par paquets, chaque paquet comportant une charge marchande de données constituant un fragment de message et des informations de service concernant l'adresse d'un port de réception de l'équipement destinataire, l'identité du message auquel il appartient et sa position relative dans un tel message. Ce procédé est remarquable en ce qu'il comporte un processus de recensement des paquets mis à disposition de l'équipement par ledit réseau de transmission et un processus de réassemblage de message à partir des paquets recensés par le processus de recensement qui mettent en oeuvre une table de pointeurs de paquets pointant les paquets mis à disposition de l'équipement par ledit réseau de transmission, triés par message d'appartenance, lesdits pointeurs de paquets étant mis, pour chaque message d'appartenance, dans une pile selon l'ordre de mise à disposition de l'équipement des paquets qu'ils pointent et pourvus de champs additionnels d'informations ou statut signalant doublons, divergences entre l'ordre de mise à disposition des paquets d'une pile et l'ordre naturel des fragments de message constitués par les charges marchandes des paquets, et le sort du paquet pointé au cours du processus de réassemblage.

Avantageusement, les pointeurs de paquets de la table sont pourvus d'un champ additionnel d'informations réservé à une signalisation indiquant si le paquet pointé est le dernier d'un message.

Avantageusement, les pointeurs de paquets de la table renferment un champ additionnel d'informations réservé à l'identification du réseau de communication de provenance du paquet pointé.

Avantageusement, la table de pointeurs de paquets est organisée en descripteurs de message, chaque descripteur de message contenant une pile de pointeurs de paquets pouvant être allouée à un message particulier.

Avantageusement, lorsque la table de pointeurs de paquets est organisée en descripteurs de message, chaque descripteur de message comporte, en plus d'une pile de pointeurs, un bloc entête contenant des informations de service relatives à l'identité du message auquel est allouée sa pile de pointeurs, à l'adresse de destination du message auquel est allouée sa pile de pointeurs, à la gestion du fonctionnement de sa pile de pointeurs et à l'état de réassemblage du message.

Avantageusement, lorsque la table de pointeurs de paquets est organisée en descripteurs de message, elle est accompagnée d'une table d'allocation de descripteurs de message répertoriant les descripteurs de message de la table de pointeurs de paquets en cours d'allocation à des messages.

Avantageusement, le procédé de reconstitution de message est mis en oeuvre avec des paquets dont le champ d'informations de service renseigne également sur leur longueur et comporte les étapes suivantes :
- stockage, dans un premier espace de mémoire de travail, des paquets provenant des réseaux de transmission par paquets,
- création, dans un deuxième espace de mémoire de travail, d'une table formée de N descripteurs, N étant un entier positif, allouables à des messages en cours de reconstitution et d'une table d'éléments d'allocation de descripteurs, chaque descripteur comportant :
   - une pile de M pointeurs, M étant un entier positif, allouables à des paquets stockés dans le premier espace de mémoire de travail, chaque pointeur de paquets renfermant une partie réservée à l'adresse, dans le premier espace de mémoire de travail, du paquet qui lui est alloué, une partie réservée à la position relative du paquet au sein du message alloué au descripteur et une partie réservée à un statut précisant la situation, dans l'instant, du paquet alloué, au cours du déroulement d'une opération de reconstitution de message, et
   - un bloc entête avec des informations de service concernant, l'identification du message alloué au descripteur, la position, dans la pile de pointeurs de paquet du descripteur, du premier pointeur disponible de la pile à allouer, la position maximale attendue du prochain paquet à réassembler dans le message autorisant un chaînage avec le dernier paquet réassemblé au message,
   chaque élément d'allocation de descripteur désignant un descripteur en lui associant un drapeau signalant l'état alloué ou non du descripteur désigné,
- analyse des informations de service de chaque paquet nouvellement arrivé à l'équipement, pour en extraire l'identité du message dont il fait partie et le port de réception destinataire de ce message au sein de l'équipement,
- recherche dans la table de descripteurs, à l'aide de la table d'éléments d'allocation, d'un descripteur de message attribué au message identifié dans les informations de service du paquet,
   en l'absence de descripteur alloué :
   - allocation d'un descripteur disponible de la table au message identifié dans les informations de service du paquet et mise à jour de la table d'éléments d'allocations,
   - allocation au paquet, du premier pointeur disponible de la pile du descripteur nouvellement attribué, au paquet nouvellement arrivé en cours d'analyse avec un statut intermédiaire d'éligible, et
   - mise à jour du bloc entête du descripteur,
   en présence d'un descripteur alloué :
   - allocation au paquet, du premier pointeur disponible de la pile du descripteur,
   - comparaison du paquet avec ceux correspondant aux pointeurs déjà alloués de la pile du descripteur,
      en présence d'un pointeur déjà alloué pointant sur un paquet ayant la même position dans le message, affectation au pointeur alloué au paquet d'un statut intermédiaire de redondant,
      en l'absence d'un pointeur déjà alloué pointant sur un paquet ayant la même position dans le message,
      - affectation au pointeur alloué au paquet d'un statut intermédiaire d'éligible,
- analyse répétitive, en tâche de fond, des piles de pointeurs des descripteurs de la table effectivement alloués à des messages pour retirer du premier espace de la mémoire de travail, dans le bon ordre, sans répétition ni omission, tous les paquets de chaque message en cours de réception et transférer leurs charges marchandes à une pile de reconstitution de message, cette analyse consistant, au niveau d'une pile de descripteur,
   - à prendre en considération dans la pile, par ordre d'ancienneté décroissante, les pointeurs effectivement alloués à des paquets, en recherchant le premier possédant un statut intermédiaire d'éligible
      si la position relative dans le message, du paquet pointé, extraite des champs d'informations de service de ce paquet, est inférieure ou égale à la position maximale de chaînage inscrite dans le bloc entête du descripteur,
      - à déposer dans une pile de reconstitution de message, la charge marchande du paquet pointé,
      - à mettre à jour, dans le bloc entête du descripteur, la position maximale de chaînage en augmentant sa valeur de la longueur de la charge marchande déposée, et
      - à passer au pointeur suivant de la pile,
      si la position relative dans le message, du paquet pointé, extraite des champs d'informations de service de ce paquet, est supérieure à la position maximale de chaînage inscrite dans le bloc entête du descripteur,
      - à affecter le pointeur du statut intermédiaire d'éligible prématuré, et
      - à passer au pointeur suivant de la pile,
      dès qu'un dépôt a été mené à bien
   - à changer le statut intermédiaire d'éligible ou d'éligible prématuré du pointeur alloué au paquet déposé en un statut définitif de déposé,
   - à examiner la position relative dans le message, du paquet déposé
      Si le paquet déposé est le dernier d'un message
   - à fermer la pile de reconstitution de message, et
   - à désactiver le descripteur alloué au message en mettant à jour la table d'éléments d'allocation, Si le paquet déposé n'est pas le dernier d'un message
   - à changer le statut du ou des pointeurs alloués à des paquets de même position relative dans le message et placés en aval dans la pile avec un statut intermédiaire de redondant en statut définitif de redondant,
   - à rechercher, en amont de la pile, les pointeurs alloués à des paquets avec le statut intermédiaire d'éligible prématuré, et
   - lorsque cette recherche est positive, à vérifier la réalité du statut intermédiaire d'éligible prématuré en comparant la position relative dans le message du paquet pointé, extraite des champs d'informations de service du paquet pointé, avec une position maximale de chaînage figurant dans le bloc entête du descripteur,
      Si la position relative dans le message, du paquet pointé par un pointeur au statut intermédiaire d'éligible prématuré est inférieure ou égale à la position maximale de chaînage,
      - à changer le statut intermédiaire d'éligible prématuré en statut intermédiaire d'éligible, et
      - à reprendre l'analyse de la pile au niveau du pointeur alloué ayant subi le changement de statut,
      dès qu'un dépôt échoue
   - à changer le statut du pointeur alloué au paquet dont le dépôt a échoué, de statut intermédiaire d'éligible en statut définitif de refusé
   - à rechercher dans la pile un autre pointeur alloué correspondant au paquet dont le dépôt a échoué mais affecté d'un statut intermédiaire de redondant,
      si la recherche est positive
   - à changer le statut du pointeur trouvé, d'intermédiaire redondant en intermédiaire éligible, et
   - à reprendre l'analyse de la pile de pointeur, au niveau du pointeur alloué ayant subi le changement de statut,
      si la recherche est négative
   - à abandonner momentanément la reconstruction du message en mémoire de courrier, cette reconstruction étant reprise naturellement à l'arrivée du prochain fragment.

Avantageusement, un descripteur de messages est également désalloué en cas de réception de paquets appartenant à un nouveau message ayant la même adresse finale de destination que son message d'allocation.

Avantageusement, lorsque qu'un message est transmis de façon redondante par plusieurs réseau de transmission, un descripteur n'est désalloué, après dépôt du dernier paquet d'un message, qu'une fois reçus les paquets redondants correspondant à ce dernier paquet de message ou qu'une fois dépassé un délai correspondant la différence maximale admissible entre les temps d'acheminement des réseaux de transmission pour le message considéré.

Avantageusement, lorsqu'un nouveau pointeur est ajouté dans un descripteur de message dont la pile de pointeurs est pleine et rebouclée sur elle-même, on vérifie que l'ancien pointeur écrasé par le nouveau ainsi créé possède un statut définitif. Dans le cas contraire, une signalisation d'erreur peut être produite.

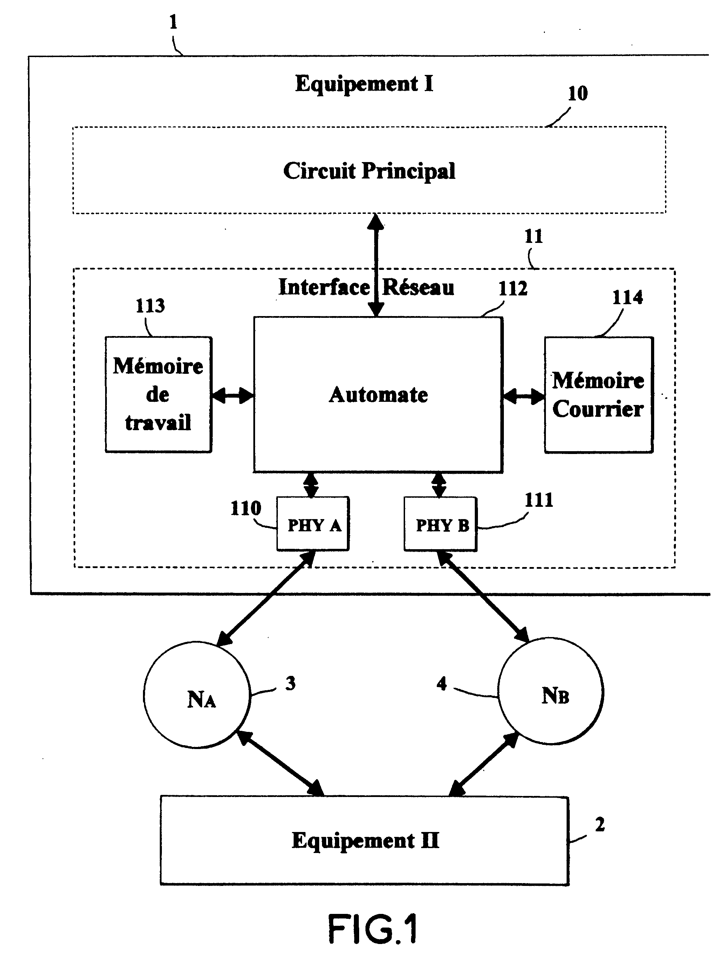

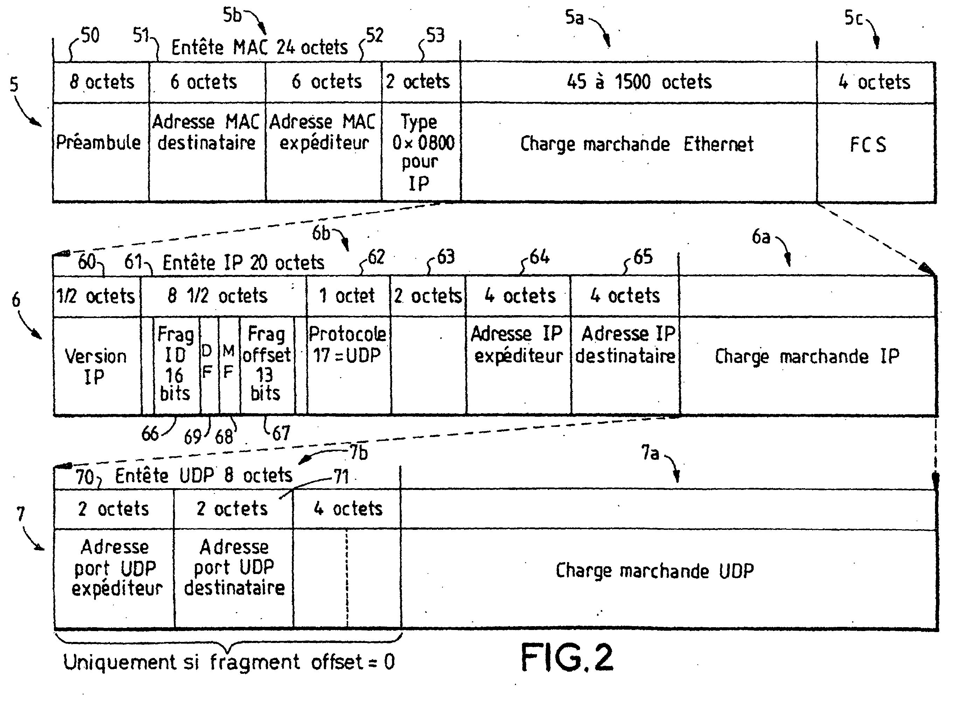

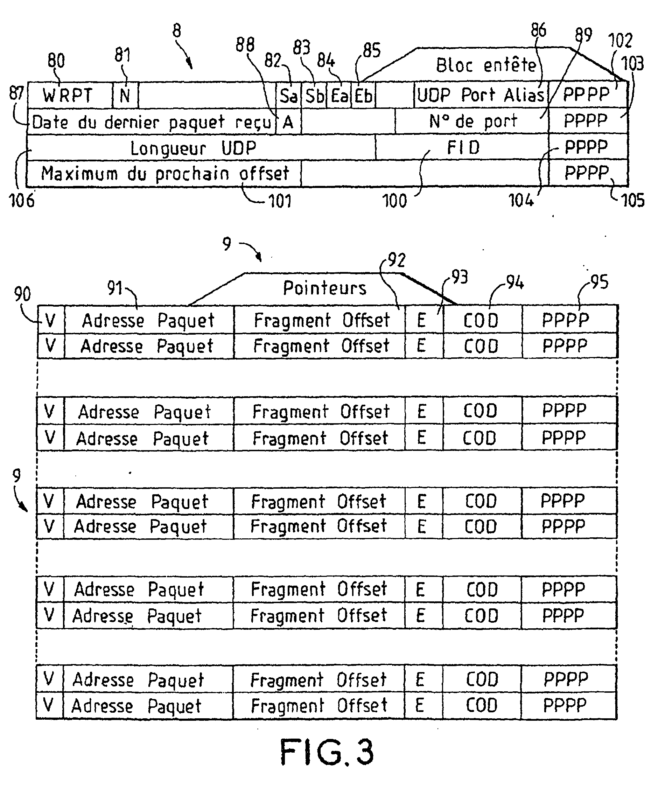

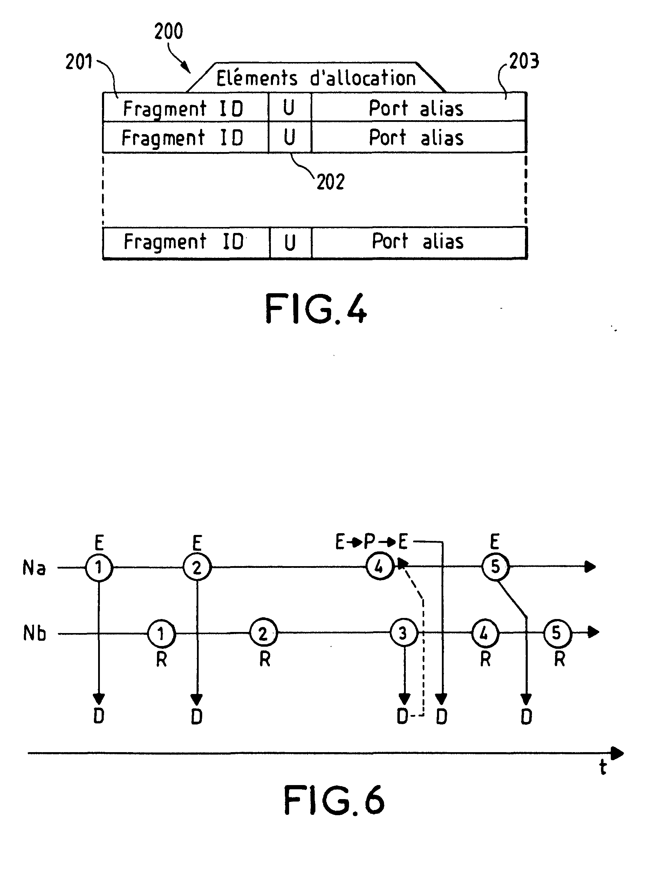

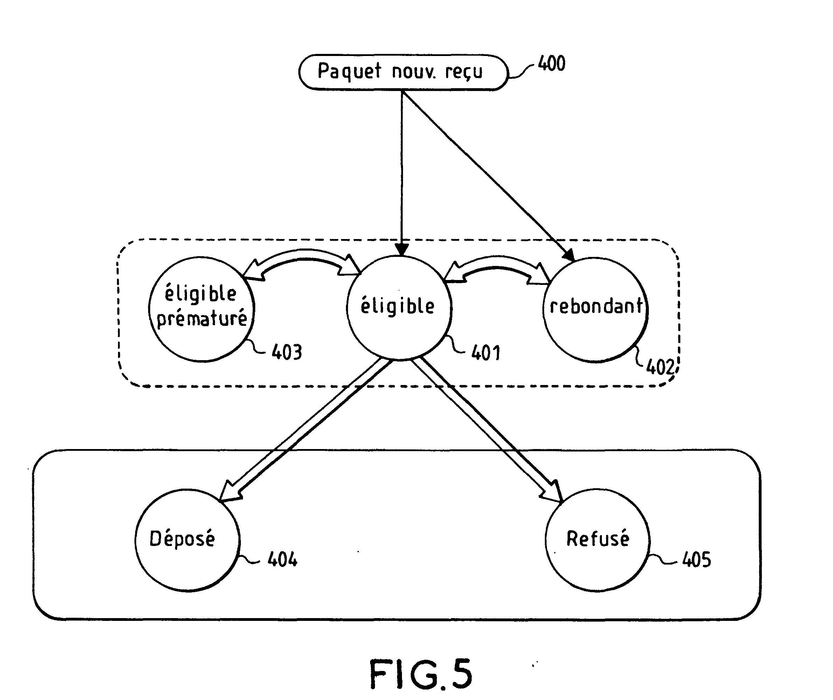

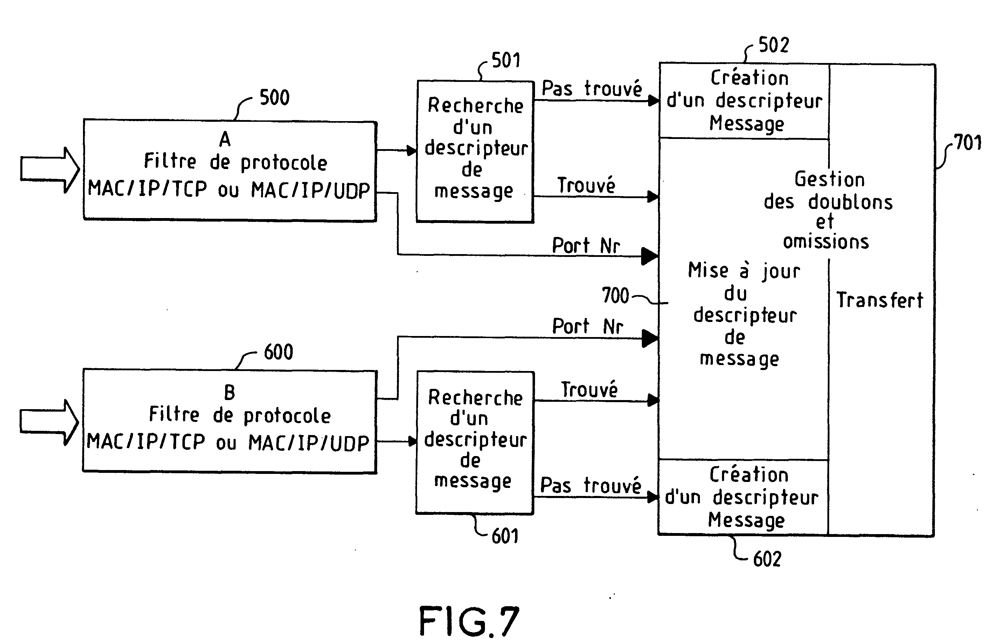

D'autres caractéristiques et avantages de l'invention ressortiront de la description ci-après d'un mode de réalisation donné à titre d'exemple. Cette description sera faite en regard du dessin dans lequel :
- une figure 1 est un schéma montrant deux équipements communiquant entre eux par l'intermédiaire de deux réseaux de transmission de données distincts, l'un des équipements ayant sa structure plus détaillée pour faire apparaître la constitution de ses accès aux réseaux de transmission,
- une figure 2 détaille le format de paquet MAC/IP/UDP,
- une figure 3 détaille la composition, à base d'un bloc entête et d'une pile de pointeurs de paquet, d'un descripteur de message utilisé pour la reconstitution des messages reçu par un équipement, au moyen d'un ou plusieurs réseaux de transmission de données par paquets,
- une figure 4 détaille la composition d'un élément d'allocation d'une table d'éléments d'allocation de descripteurs de message,
- une figure 5 est un schéma illustrant les changements possibles de statuts affectant les pointeurs d'une pile de descripteur de message au cours de la reconstitution du message correspondant,
- une figure 6 est un diagramme illustrant la manipulation faite, au cours de la reconstitution d'un message, parmi les paquets nouvellement reçus revendiquant leur appartenance à ce message, et
- une figure 7 est un schéma illustrant les traitements subis par les paquets, depuis leur délivrance à un équipement par les réseaux de transmission assurant leurs acheminements, jusqu'à la reconstitution des messages qu'ils composent.

Sur la figure 1, deux équipements I, II indexés par 1, 2 sont plus ou moins éloignés et communiquent entre eux au travers de deux réseaux de transmission distincts Na, Nb indexés par 3, 4. Chaque équipement 1, 2 est pourvu d'un circuit principal 10 exécutant les tâches fondamentales pour lesquelles il a été conçu et d'un circuit d'interface réseau 11 contrôlant les accès du circuit principal 10 de l'équipement aux deux réseaux de transmission Na, Nb 3, 4.
Dans le sens réception, qui sera le seul décrit par la suite, l'interface réseau 11 a les tâches de détecter les messages ou fragments de message parvenant aux accès réseaux de l'équipement 1, de sélectionner, parmi les messages ou fragments de message détectés sur les accès réseaux, ceux intéressant réellement l'équipement, de réassembler les messages reçus fragmentés et de trier, en fonction de leur nature, les messages sélectionnés et éventuellement réassemblés afin de les présenter de manière ordonnée au circuit principal 10 de l'équipement 1.
La détection des messages ou fragments de message, au niveau des accès aux réseaux 3, 4, sur les milieux physiques de propagation utilisés par les réseaux 3, 4, et leurs mises sous forme binaire est le fait de circuits analogiques de réception PHY A, PHY B indexés par 110, 111 dont la composition est très dépendante des caractéristiques des milieux de propagation des réseaux. La sélection, parmi les messages ou fragments de message détectés sur les accès de l'équipement 1 aux réseaux de transmission 3, 4 et mis sous forme binaire par les circuits analogiques de réception 110, 111, des messages ou fragments de message intéressants l'équipement 1 ainsi que le réassemblage des messages fragmentés et le tri, en fonction de leur nature, des messages éventuellement réassemblés mettent en oeuvre des traitements purement logiques de types séquentiel et/ou combinatoire, qui peuvent être réalisés, comme représenté, à l'aide d'un automate logique 112 mettant à contribution une mémoire vive de travail 113 et une mémoire vive de courrier 114. La mémoire vive de travail 113 sert au stockage temporaire des éléments binaires des messages détectés sur les accès réseau de l'équipement 1, par les circuits analogiques de réception 110, 111, le temps des opérations de sélection, de tri et de reconstitution des messages. La mémoire courrier 114 recueille dans différentes piles appelées ports de réception, les messages résultant des opérations de sélection et de reconstitution, triés par natures. Elle est destinée à servir de boîte aux lettres de réception pour le circuit principal 10 de l'équipement 1 qui peut la consulter directement ou au travers de l'automate logique 112.

Les deux réseaux de transmission de données Na et Nb 3, 4 sont des réseaux de transmission par paquets qui acheminent des messages ou des fragments de message sous la forme de paquets ou datagrammes (suites d'éléments binaires) circulant l'un derrière l'autre, de manière asynchrone, sur les liaisons des réseaux de transmission, sous la forme de modulations de signaux de transmission adaptés aux propriétés du milieu physique utilisé pour la transmission, le milieu ambiant (transmission sans fil) ou des câbles électriques ou optiques (transmission par fil).
Dans un réseau de transmission par paquets, le datagramme constituant un paquet renferme des données utiles ou charge marchande et des informations de service permettant le routage du paquet au sein du réseau de transmission et le signalement de certaines caractéristiques du paquet utiles à son exploitation dans les équipements destinataires. Son format ou organisation répond à des règles précises dites protocole de couche physique ou de premier niveau, connues de tous les participants au réseau. Les données utiles d'un paquet sont rassemblées dans un champ dit de données utiles lui-même soumis à une organisation précise, connue des équipements destinataires, souvent du même genre que celle d'un paquet, avec à nouveau, un champ de données utiles et des champs d'informations de service. Cette organisation du champ de données utiles d'un paquet répond à des règles dites protocole de couche logique ou de deuxième niveau. Le champ de données utiles défini par le protocole de deuxième niveau peut lui-même avoir un format défini par un protocole de troisième niveau et ainsi de suite, de sorte que l'on se retrouve souvent avec un format de paquet respectant plusieurs couches de protocoles.
II est notamment assez fréquent, dans un réseau de transmission par paquets, d'utiliser un format de paquet respectant, au premier niveau, celui de la couche physique, un protocole Ethernet MAC (acronyme de l'anglo-saxon "Média Access Control") répondant à une norme IEEE802.3 et/ou 802.2 établie par l'Institute of Electrical and Electronics Engineers et, aux deuxième et troisième niveaux, des protocoles Internet de type IP/UDP ( acronymes des termes anglo-saxons "Internet Protocol" et "User Datagram Protocol") ou IP/TCP (acronyme de l'anglo-saxon "Transport Control Protocol") ou IP/ICMP (acronyme de l'anglo-saxon "Internet Control Message Protocol") répondant aux normes RFC émises par le DARPA (acronyme de l'anglo-saxon "Défense Advanced Research Project Agency").
Le protocole Ethernet Mac utilisé au premier niveau impose une limitation à la longueur d'un paquet impliquant une fragmentation des messages de longueurs supérieures à cette limitation. Cette fragmentation des messages longs est gérée au deuxième niveau par des informations de service spécifiques du protocole IP.

La figure 2 détaille le format d'un paquet utilisant trois couches de protocoles, un premier niveau de protocole Ethernet MAC qui s'applique à la couche physique d'un réseau Ethernet proprement dit et spécifie, au niveau de ce réseau, le format global d'un paquet, un deuxième niveau de protocole IP qui spécifie le format de la charge marchande Ethernet du paquet dans le cadre Internet, et un troisième niveau de protocole UDP qui spécifie le format de la charge marchande IP. Le protocole UDP de troisième niveau est choisi à titre illustratif pour montrer une organisation complète de paquet. Il n'intervient pas dans la reconstitution des messages fragmentés et peut être remplacé par d'autres protocoles Internet tels le protocole TCP ou le protocole ICMP.
Le format global du paquet, imposé par le protocole de premier niveau de type MAC, fait l'objet du tableau supérieur 5. Celui du champ de données utiles Ethernet constituant la charge marchande du réseau, imposé par le protocole de deuxième niveau de type Internet IP, fait l'objet du tableau médian 6, tandis que celui du champ de données utiles IP ou charge marchande IP imposé par le protocole de troisième niveau de type Internet UDP est illustré par le tableau inférieur 7.
Comme le montre le tableau supérieur 5 de la figure 2, le protocole Ethernet MAC impose, au datagramme d'un paquet, de comporter un champ de données utiles 5a de longueur comprise entre quarante-cinq et quinze cents octets, précédé d'une entête dite entête MAC 5b de vingt-quatre octets dédiée à des informations de service du premier niveau, celui de la couche physique, et suivi d'un code redondant cyclique 5c aussi appelé FCS (acronyme de l'anglo-saxon "Frame Control Séquence") occupant quatre octets et portant sur la totalité du paquet préambule excepté.
L'entête MAC 5b se compose d'un préambule 50 de huit octets servant à la synchronisation, les paquets étant transmis de manière asynchrone, suivi d'une adresse MAC destinataire 51 de six octets, d'une adresse MAC expéditeur 52 de six octets et d'une information de service 53 sur deux octets, consacrée soit à la longueur du paquet en octets si sa valeur est inférieure à 1536, soit au type, c'est-à-dire au protocole de deuxième niveau respecté par le champ de données utiles MAC 5a, lorsque sa valeur est supérieure à 1536. Lorsque le champ de données utiles MAC respecte un protocole IP, la valeur attendue de l'information de service 53 est 0800 en hexadécimal.
Lorsque, comme supposé, le champ de données utiles MAC 5a d'un paquet respecte un protocole IP, l'entête MAC 5b renfermant une information de type 53 ayant la valeur hexadécimale 0800, le datagramme qui le compose est à son tour décomposé, comme le montre le tableau médian 6 de la figure 2, en un champ de données utiles IP 6a constituant la charge marchande au niveau du protocole IP, précédé d'une entête 6b dite entête IP. Dans l'exemple décrit, cette entête correspond à un protocole IPV4 sans champs optionnels et occupe vingt octets consacrés à des informations de service concernant le deuxième niveau, celui du protocole IP souvent désigné couche logique de transport.
L'entête IP 6b comporte un premier champ d'informations de service 60, d'une longueur d'un demi-octet, identifiant la version utilisée du protocole IP et ayant, pour la version 4, la valeur binaire attendue 0100. Ce premier champ d'informations de service 60 est suivi par un ensemble 61 de sept autres champs d'informations de service occupant huit octets et demi parmi lesquelles un champ identificateur de fragment 66 de 2 octets identifiant le message d'appartenance du paquet, un champ « fragment Offset» 67 de 13 bits donnant la position relative du paquet dans son message d'appartenance et permettant de recomposer le message à partir de tous les paquets s'en revendiquant et deux drapeaux, l'un DF 69 signalant si la charge marchande IP 6a correspond à un message fragmenté ou non et l'autre MF 68 signalant en prenant la valeur zéro que le paquet correspond à un fragment final de message, puis par un champ d'informations de service 62, d'une longueur de un octet, identifiant le protocole de troisième niveau respecté par le champ de données utiles IP 6a. Lorsque, comme supposé ici, le champ de données utiles IP 6a respecte le protocole Internet UDP, la valeur attendue de l'information de service 62 est 17 en décimal. A la suite du champ d'informations de service 62 identifiant le protocole de troisième niveau on trouve un autre champ d'informations de service 63, d'une longueur de deux octets, puis un champ d'informations de service 64, d'une longueur de quatre octets, consacré à une adresse IP expéditeur et un champ d'informations de service 65, d'une longueur de quatre octets, consacré à une adresse IP destinataire.
Lorsque, comme supposé, le champ de données utiles IP 6a respecte un protocole UDP, l'entête IP 6b renfermant un identifiant de protocole de troisième niveau 62 ayant la valeur décimale 17, le datagramme qui le compose est à son tour décomposé, comme le montre le tableau inférieur 7 de la figure 2, en un champ de données utiles UDP 7a constituant la charge marchande au niveau du protocole UDP, précédé d'une entête 7b dite entête UDP de huit octets consacrée à des informations de service concernant le troisième niveau, celui du protocole UDP souvent désigné couche logique de réseau. L'information contenue par l'entête 7b n'est présente que dans les paquets correspondant au premier fragment d'une charge marchande IP fragmentée. De tels paquets sont identifiables par un champ « fragment offset » (67) nul.
L'entête UDP 7b comporte un premier champ d'informations de service 70, d'une longueur de deux octets, consacré à une adresse UDP expéditeur identifiant un port d'émission dans l'équipement expéditeur d'où provient la charge marchande contenue dans le champ de données UDP 7a, suivi d'un deuxième champ d'informations de service 71, d'une longueur de deux octets, consacré à une adresse UDP destinataire identifiant un port de réception dans l'équipement destinataire et d'un ensemble 72 de deux autres champs d'informations de service occupant les quatre octets restants.
Les équipements (1, 2 figure 1) intéressés par les variétés de paquets respectant les couches de protocoles MAC/IPv4/UDP dont le format vient d'être détaillé à la figure 2 ou les couches de protocoles MAC/IPv4/TCP ou encore celle respectant les couches de protocole MAC/IPv4/ICMP, comportent, dans leur mémoire courrier (114 figure 1), au moins un port de réception de message affecté à chacune de ces catégories de paquets et éventuellement, d'autres ports de réception pour les paquets qui lui sont adressés mais dont les trois niveaux de protocole ne peuvent être complètement exploités, soit parce que leur protocole de deuxième niveau n'est pas de type IPv4, soit parce que leur protocole de troisième niveau ne correspond ni au protocole UDP, ni au protocole TCP, ni au protocole ICMP.
Les opérations effectuées sur les paquets par l'interface réseau (11 figure 1) d'un équipement (1, 2 figure 1) consistent à sélectionner dans les paquets mis à disposition de l'équipement (1, 2 figure 1) par les réseaux (3, 4 figure 1), ceux qui sont destinés à l'équipement, à extraire des paquets sélectionnés leur charge marchande de données, à déterminer si cette charge marchande correspond à un message ou à un fragment de message, à réassembler les messages fragmentés et à diriger les messages obtenus, éventuellement défragmentés, vers le ou les ports de réception adéquats de la mémoire courrier (114 figure 1) de l'équipement. Elles sont menées par l'automate (112 figure 1) de l'interface réseau d'un équipement (1, 2 figure 1) sur les versions binaires ou datagrammes des paquets mises dans la mémoire de travail (113 figure 1) par les circuits analogiques de réception (110, 111 figure 1) intercalés devant les accès de l'équipement (1, 2 figure 1) aux réseaux (3, 4 figure 1).

Comme les circuits analogiques de réception (110, 111 figure 1) exploitent, pour repérer les début et fin de paquet, le préambule (50 figure 2) de l'entête et le champ final 5c de code redondant cyclique du protocole Ethernet MAC appliqué au premier niveau de la couche physique, ils assurent implicitement une reconnaissance des datagrammes dont le format répond au protocole Ethernet MAC. Cette reconnaissance est utilisée pour limiter le traitement aux seuls datagrammes stockés dans la mémoire de travail (113 figure 1) réellement au format Ethernet MAC.

Le respect d'un protocole Ethernet MAC de premier niveau par les datagrammes de paquets fournis par les circuits analogiques de réception (110, 111 figure 1) étant assuré, les opérations de sélection de paquets, de recomposition de messages fragmentés et de tri de messages effectuées par l'automate (112 figure 1) débutent par une vérification de l'utilisation d'un protocole de deuxième niveau de type IP faite en contrôlant la valeur de l'identifiant du protocole de deuxième niveau du paquet figurant, en entête de paquet, dans le champ d'informations de service (53 figure 2) du protocole Ethernet MAC consacré au type, identifiant qui doit valoir 0800 en hexadécimal pour que le protocole de deuxième niveau soit bien de type IP.
Lorsque la vérification d'utilisation d'un protocole de deuxième niveau de type IP échoue, le paquet est soumis à une recherche de concordance entre la valeur du champ d'informations de services consacrés à l'adresse MAC destinataire (51 figure 2) et celles des adresses MAC destinataire affectées à l'équipement concerné. En l'absence de concordance le paquet est rejeté. En présence d'une concordance, le datagramme figurant dans le champ de données utiles (6a figure 2) est déposé dans un port de réception particulier de la mémoire courrier 114, dit port de réception Ethernet brut.
Lorsque la vérification de l'utilisation par le paquet, au deuxième niveau, d'un protocole IP, est positive, le paquet est soumis à une recherche de concordance entre la combinaison des valeurs des champs d'informations de services consacrés à l'adresse MAC destinataire (51 figure 2) et à l'adresse IP destinataire (65 figure 2) et les combinaisons d'adresses MAC destinataire et IP destinataire affectées à l'équipement concerné. Il est rejeté en l'absence de concordance. Par contre, si une concordance est trouvée, il est soumis à une identification 26 du protocole de troisième niveau utilisé par le paquet et à une extraction de message
L'identification de protocole de troisième niveau se fait par scrutation de la valeur prise par l'identifiant de protocole de troisième niveau figurant, en entête de paquet, dans le champ d'informations de service (62 figure 2) du protocole IP qui prend une valeur décimale 6 pour un protocole TCP, 17 pour un protocole UDP, 1 pour un protocole ICMP, etc...
Lorsque l'identifiant de protocole de troisième niveau présent dans l'entête de paquet signale un protocole TCP ou UDP, une opération de reconstitution de message basée sur l'analyse des champs identificateur de fragment et fragment Offset ainsi que des drapeaux DF de fragmentation et MF de fragment final (66, 67; 68,69 figure 2), se superpose à la recherche d'un port destinataire car le paquet peut correspondre à un fragment de message.
Cette opération de reconstitution de message fragmenté fait appel à deux processus distincts se déroulant simultanément : un processus de recensement par messages d'appartenance, des paquets récemment reçus par l'équipement, qui sont en transit dans la mémoire de travail (113 figure 1) et dont l'analyse des informations de service a montré qu'ils concernaient l'équipement et satisfaisaient des protocoles MAC/IP/TCP ou MAC/IP/UDP, et un processus de réassemblage dans le bon ordre et sans omission des paquets se revendiquant d'un même message, dans une pile de la mémoire courrier (114 figure 1) mise à une adresse correspondant au port de réception du message concerné.

Les gestions du processus de recensement des paquets récemment reçus aux protocoles MAC/IP/TCP ou MAC/IP/UDP intéressant l'équipement et du processus de réassemblage de ces paquets en messages se font à l'aide d'une table de descripteurs de message manipulée au moyen d'une table d'allocation de descripteurs de message.
La table de descripteurs de message est stockée dans la mémoire de travail (113 figure 1). Elle répertorie les paquets récemment reçus, encore dans la mémoire de travail (113 figure 1), classés par message d'appartenance et par ordre de réception, et affectés d'un statut précisant les sorts qui leur sont impartis au cours des déroulements des processus de recensement et de réassemblage. Elle est constamment mise à jour en fonction de l'arrivage des paquets et des états de réassemblage des messages. Elle renferme N descripteurs de message allouables chacun à un message en cours de réception et de réassemblage, N prenant par exemple la valeur 4096 soit éventuellement 16 par flux de messages dans le cas ou le dispositif de réception a une capacité de 256 flux de messages chacun d'eux étant associé à une adresse MAC destination attendue localement.
Chaque descripteur de message est pourvu d'un bloc entête et d'une pile de pointeurs de paquet. Le bloc entête rassemble des informations sur l'identité du message en cours de réception alloué au descripteur, la destination de ce message au sein de l'équipement et l'état de réassemblage de ce message. La pile comporte de M pointeurs de paquet, M prenant par exemple la valeur dix, allouable aux paquets reçus, provisoirement stockés dans la mémoire de travail (113 figure 1), se réclamant du message attribué au descripteur. Chaque pointeur alloué rassemble, sur le paquet qu'il pointe, des informations sur l'adresse de ce paquet en mémoire de travail (113 figure 1), la position relative de ce paquet dans le message alloué au descripteur et sur l'état de traitement de ce paquet au cours des processus de recensement des paquets et de réassemblage du message attribué au descripteur aboutissant à la présentation d'un message complet dans la mémoire courrier (114 figure 1) de l'équipement.

Plus précisément, un bloc d'entêté 8 de descripteur de message comporte, comme montré dans la figure 3 :
- un champ d'informations WRPT 80 repérant la position courante en écriture dans la pile de pointeurs 9,
- un drapeau N 81 indiquant si la pile de pointeurs du descripteur de message est pleine ou non. (Lorsque la pile de pointeurs est pleine, l'ensemble de ses éléments concerne des fragments du message en cours et doive être pris en compte dans le processus de réassemblage. Dans le cas contraire seuls les pointeurs situés entre la position initiale 0 et WRPT relèvent du message courant et doivent être pris en compte dans le processus de réassemblage),
- des drapeaux "Sa" 82, "Sb" 83, indiquant qu'un paquet correspondant à un premier fragment du message attribué au descripteur a été reçu par le réseau correspondant (Na ou Nb figure 1),
- des drapeaux "Ea" 84, "Eb" 85, indiquant qu'un paquet correspondant à un dernier fragment du message attribué au descripteur a été reçu par le réseau correspondant (Na ou Nb figure 1),
- un champ d'informations "UDP port alias" 86 identifiant le port de réception affecté, au niveau du protocole UDP, aux paquets et donc au message attribué au descripteur,
- un champ d'informations "date du dernier paquet reçu" 87 contenant la date de la dernière allocation à un paquet reçu, d'un pointeur de la pile du descripteur,
- un drapeau d'alerte "A" 88 activé lorsque la dernière allocation d'un pointeur de la pile du descripteur remonte à une date dont l'ancienneté s'apprête à dépasser les capacités de mesure de l'horloge (problème de rebouclage du compteur de temps de l'horloge),
- un champ d'informations "numéro de port" 89 donnant l'adresse locale, dans l'équipement concerné, du port de réception identifié, au niveau du protocole UDP, dans le champ d'informations "UDP port alias" 86,
- un champ d'informations "Longueur UDP" 106 consacré à la longueur de la charge marchande UDP du datagramme en cours de réception, qui est une information figurant dans les champs d'informations de service de tout premier paquet aux protocoles MAC/IP/UDP et qui renseigne sur la longueur du message,
- un champ d'informations "FID" 100 consacré à l'identifiant de message que constitue le contenu du champ "Frag ID" figurant dans les champs d'informations de service (66 figure 2) de tout paquet aux protocoles MAC/IP,
- un champ d'informations "Maximum du prochain Offset" 101 dont la valeur correspond à la somme du fragment d'offset et de la longueur de la charge marchande du dernier paquet reçu et transféré avec succès dans la mémoire de courrier 114, et
- des champs de bits de parité "PPPP" 102, 103, 104, 105 permettant une détection d'erreur.

Un pointeur de paquet d'une pile 9 de descripteur de message comporte pour sa part :
- un drapeau 'V" 90 indiquant le réseau d'origine (Na ou Nb figure 1) du paquet attribué au pointeur,
- un champ d'informations "adresse paquet" 91 donnant l'adresse, dans la mémoire de travail, du paquet attribué au pointeur,
- un champ d'informations "fragment offset" 92 consacré à la position relative, dans le message correspondant au descripteur, de la charge marchande du paquet attribué au pointeur, cette position relative étant extraite du champ "frag offset" figurant dans les champs d'informations de service (67 figure 2) de tout paquet aux protocoles MAC/IP,
- un drapeau "E" 93 signalant que le paquet attribué au pointeur correspond à un dernier fragment de message, ce drapeau "E" correspondant au drapeau "MF" (68 figure 2) figurant dans les drapeaux de control de la couche de protocole IP du paquet attribué au pointeur,
- un champ "COD" 94, de trois bits, correspondant à un statut évolutif attribué au paquet pointé en fonction de son devenir dans le cours des opérations de recensement des paquets se réclamant du message attribué au descripteur et de réassemblage de ces paquets pour reconstituer le message, ce statut constitués d'un nombre binaire de trois digits permettant de distinguer huit situations différentes par paquet, et
- un champ de bits de parité "PPPP" 95 permettant une détection d'erreur.

La table d'allocation de descripteurs de message répertorie, dans la table de descripteurs de messages, les descripteurs de message actifs, en cours d'utilisation par des messages en cours de réassemblage. Comme le montre la figure 4, elle renferme une pile 200 d'éléments d'allocation pointant chacun un descripteur de message particulier dans la table de descripteur de message. Chaque élément d'allocation renferme :
- un champ d'informations "fragment ID" 201 identifiant un message en cours d'allocation au descripteur pointé ou lui ayant été alloué dans le passé,
- un drapeau "U" 202 indiquant si le descripteur pointé est ou non en cours d'allocation à un message en cours de réassemblage, et
- un champ d'informations "port alias" 203 répétant le champ d'informations "UDP Port alias" 86 du bloc entête 8 du descripteur pointé contenant l'adresse destinataire finale du message

Le processus de recensement des paquets par messages d'appartenance, s'engage, à chaque réception par l'équipement d'un paquet en provenance de l'un des réseaux de communication (Na ou Nb figure 1), mentionnant des adresses destinataires MAC et IP correspondant à l'équipement, respectant les formats des protocoles MAC/IP/TCP ou MAC/IP/UDP. Il commence par la recherche, dans la table de descripteurs de message, d'un descripteur déjà alloué au message d'appartenance du paquet. Cette recherche se fait par l'entremise de la table 200 d'allocation de descripteurs de message qui permet de limiter son domaine aux seuls descripteurs de la table de descripteurs de message déjà alloués à des messages en cours de réassemblage. Les descripteurs de message désignés par les éléments d'allocation de la table 200 d'allocation ayant un drapeau d'allocation "U" 202 à l'état alloué, sont analysés pour voir si l'un d'eux ne correspondrait pas au message d'appartenance du paquet. Deux cas peuvent se produire, soit un tel descripteur n'existe pas, soit-il existe.
Lorsque la table 200 d'allocation de descripteurs de message, ne comporte pas d'élément d'allocation avec un drapeau d'allocation "U" 202 à l'état alloué désignant un descripteur de message alloué au message d'appartenance du paquet, signifiant qu'il n'y a pas de descripteur de message actif alloué, dans la table de descripteurs de message, au message d'appartenance du paquet, on procède à la création d'un tel descripteur dans la table de descripteurs de message et à la mise à jour de l'élément d'allocation qui le désigne dans la table 200 d'allocation de descripteurs de message. Plus précisément, cela consiste :
- à rechercher, dans la table 200 d'allocation de descripteurs de message, un élément d'allocation avec un drapeau d'allocation "U" 202 à l'état non alloué,
- à faire passer le drapeau d'allocation "U" 202 de cet élément d'allocation de l'état non alloué à l'état alloué,
- à mettre à jour le champ d'informations "fragment ID" de cet élément d'allocation pour le faire correspondre à celui du paquet en cours de recensement,
- à initialiser le champ WRPT du bloc d'entêté du descripteur de message désigné par l'élément d'allocation concerné, à une valeur initiale convenue (0 par exemple),
- à initialiser le drapeau N du bloc d'entêté du descripteur de message désigné par l'élément d'allocation concerné, à la valeur indiquant un tableau de pointeurs non complet,
- à initialiser les autres champs d'informations du bloc d'entête du descripteur de message désigné par l'élément d'allocation concerné et à les renseigner pour les faire correspondre au message d'appartenance du paquet,
- à initialiser les pointeurs de la pile du descripteur de message désigné par l'élément d'allocation concerné en renseignant les champs E, V, "adresse paquet", "fragment Offset" et COD, et
- à établir les différentes valeurs des bits PPPP.

Lorsqu'il existe, dans la table de descripteurs de message, un descripteur alloué au message d'appartenance du paquet, on alloue au paquet le premier pointeur libre de la pile du descripteur, dont l'adresse est déduite du champ "WRPT" du bloc d'entêté du descripteur. Cette allocation consiste à renseigner ses champs d'informations "V", "E", "adresse paquet" et "fragment offset", à attribuer un statut au paquet dans le champ d'informations "COD", à déterminer les valeurs des bits de parité PPPP du pointeur et à faire évoluer le champ WRPT. On choisira par exemple, comme règle d'évolution de WRPT, une incrémentation simple avec rebouclage sur la valeur initiale lorsque WRPT a atteint sa valeur maximale, cette action étant associée avec la mise à jour du drapeau E de manière à signaler une pile de pointeurs pleine.

Lorsqu'un nouveau pointeur est ajouté dans un descripteur de message dont la pile de pointeurs est pleine on vérifie que l'ancien pointeur écrasé par le nouveau ainsi créé possède un statut définitif. Dans le cas contraire, une signalisation d'erreur peut être produite.

Le statut attribué à un paquet pointé dans la table de descripteur du message est évolutif et permet de suivre le sort imparti au paquet pointé au cours des processus de recensement des paquets et de réassemblage des messages.

Le diagramme de la figure 5 illustre les évolutions possibles de statut pour un paquet récemment reçu, repéré par un pointeur d'une pile de descripteur, dans le cas où le message correspondant au descripteur peut parvenir à l'équipement, de manière redondante, par deux réseaux distincts (Na et Nb figure 1) de transmission par paquets. Sur la figure 5, les flèches en traits minces correspondent à des actions du processus de recensement et les flèches en traits épais à des actions du processus de réassemblage.

Lorsqu'un paquet 400 nouvellement reçu par l'équipement mérite l'allocation d'un pointeur dans la table de descripteurs de message, il peut se voir attribuer, au niveau de son pointeur, un statut intermédiaire soit d'éligible 401, soit de redondant 402.
Lors de l'allocation à un paquet nouvellement reçu, provisoirement stocké dans la mémoire de travail (113 figure 1), d'un pointeur de descripteur de message au sein de la table de descripteurs de message, c'est-à-dire après que l'analyse des champs d'informations de service du paquet ait montré que le paquet satisfait les protocoles MAC/IP/TCP ou MAC/IP/UDP et a des adresses destinataires selon les protocoles MAC et IP attribuées à l'équipement, et après qu'un descripteur correspondant au message identifié dans le champ d'informations de service "identification de fragment" du paquet ait été trouvé ou créé dans la table de descripteurs de message, le choix du statut intermédiaire attribué au paquet se fait à la suite d'une comparaison du champ d'informations de service "fragment offset" du paquet avec ceux de tous les autres paquets pointés par les pointeurs déjà alloués de la pile de pointeurs du descripteur.
Si l'un des pointeurs déjà alloués de la pile du descripteur a la même valeur de champ "fragment d'offset", le pointeur alloué au paquet nouvellement reçu se voit attribué le statut intermédiaire de redondant 402 car il pointe un paquet déjà référencé dans la table de descripteurs.
Si aucun des pointeurs déjà alloués de la pile du descripteur a la même valeur de champ "fragment offset", le paquet nouvellement reçu se voit alloué le statut intermédiaire d'éligible 401.
Lorsque le descripteur est créé à l'occasion de la réception d'un paquet appartenant à un message pour lequel le descripteur de message correspondant ne préexiste pas, le champ "maximum du prochain offset" du bloc entête du descripteur prend la valeur 0 indiquant que le premier paquet à déposer doit correspondre à un premier fragment et avoir un champ d'information de service "fragment offset" contenant une valeur nulle.

Les deux statuts intermédiaires de redondant 402, et éligible 401 sont des statuts intermédiaires provisoires attribués à un paquet au cours du processus de recensement, qui peuvent être modifiés par le processus de réassemblage de message en fonction des aléas rencontrés.

En effet, le processus de réassemblage de message, qui se déroule en parallèle avec le processus de recensement, utilise la table d'allocation de descripteurs de message et la table de descripteurs de message initiées par le processus de recensement pour détecter les messages en cours de réception signalés par les descripteurs en cours d'allocation. Il part du tri, par messages d'appartenance, des paquets récemment reçus, et des contrôles de doublons déjà effectués dans la table de descripteurs de message pour reconstituer les messages fragmentés tout en évitant les doublons et omissions de fragments.
Pour ce faire, le processus de réassemblage de message procède à une analyse périodique des descripteurs de la table de descripteurs de message désignés comme en cours d'allocation par les éléments d'allocation de la table d'allocation de descripteurs de message.
Au cours de cette analyse périodique, il affecte, à chaque message ayant un descripteur alloué (drapeau d'allocation de l'élément d'allocation le désignant à l'état alloué), une pile particulière dans la mémoire courrier (114 figure 1), à une adresse déduite des valeurs prises par les champs d'informations "UDP port alias" et "N° de port" du bloc entête du descripteur (8 figure 3) puis exploite la pile de pointeurs de chaque descripteur alloué.
L'exploitation par le processus de réassemblage de message, d'une pile de pointeurs d'un descripteur alloué commence par le repérage de la partie utile de la pile en utilisant le drapeau N et le champ WRPT du bloc entête du descripteur et se poursuit par l'inspection de cette partie utile pour y rechercher le paquet correspondant à celui attendu dans l'instant, dans la pile de la mémoire courrier réservée au message d'allocation du descripteur et transférer sa charge utile de la mémoire de travail à la mémoire courrier.
L'inspection de la partie utile d'une pile de pointeur d'un descripteur se fait, en suivant le sens d'inscription de la pile et se limite aux pointeurs ayant un statut intermédiaire d'éligible 401 ou, comme on le verra par la suite, d'éligible prématuré 403. La recherche parmi ces pointeurs, de celui alloué au paquet attendu dans l'instant dans la pile de la mémoire courrier réservée au message d'allocation du descripteur, consiste à trouver le pointeur au statut intermédiaire d'éligible 401 ou d'éligible prématuré 403 ayant une valeur de champ d'informations "fragment offset" inférieure ou égale à la valeur du champ d'informations "Maximum du prochain offset" figurant dans le bloc entête du descripteur qui donne la limite supérieure de la valeur d'offset du paquet attendu dans la pile de la mémoire courrier.
Si la valeur du champ d'information "valeur d'offset" d'un pointeur testé est supérieure à la valeur du champ d'informations "Maximum du prochain offset" du bloc entête du descripteur, le processus de réassemblage ne procède pas au transfert de sa charge marchande dans la pile de la mémoire courrier affectée au message car un tel transfert est prématuré. Il laisse cependant une trace de son passage en donnant au pointeur testé un statut intermédiaire d'éligible prématuré 403, s'il n'a pas déjà un tel statut, pour signaler que ce pointeur n'a besoin d'être à nouveau testé qu'après le transfert effectif de la charge marchande d'un autre paquet.
Si la valeur du champ d'informations "valeur d'offset" du pointeur en cours d'analyse, est inférieure ou égale à la valeur du champ d'informations "Maximum du prochain offset" du bloc entête du descripteur, le processus de réassemblage procède au transfert effectif de la charge marchande du paquet pointé dans la pile de la mémoire courrier affectée au message.
Après chaque transfert réussi de la charge marchande d'un paquet, de la mémoire de travail (113 figure 1) à la mémoire courrier (114 figure 1), le processus de réassemblage met à jour le champ d'informations "Maximum du prochain offset" du bloc entête du descripteur en augmentant la valeur précédente de ce champ de la longueur de la charge marchande déposée et change le statut du pointeur alloué au paquet transféré en statut définitif de déposé 404, ce qui permet d'exclure le pointeur de la prochaine analyse de la pile par le processus de réassemblage. Il recherche ensuite, en amont de la même pile, d'éventuels pointeurs affectés d'un statut intermédiaire d'éligible prématuré 403. Sil en existe, il reprend son analyse de la pile au niveau du plus ancien trouvé. Si non il poursuit son analyse de la pile par le pointeur suivant.
S'il ne parvient pas à transférer un paquet, il modifie le statut du pointeur manipulé en statut définitif de refusé 405 et recherche, en aval dans la même pile, parmi les pointeurs ayant le statut intermédiaire de redondant 402, un pointeur alloué à un paquet ayant même valeur de champ d'informations "fragment offset". En cas de succès, il change le statut intermédiaire du pointeur trouvé de redondant 402 en éligible 401 et reprend son analyse de la pile depuis le pointeur au statut intermédiaire changé de redondant en éligible. En cas d'échec de la recherche, le transfert est provisoirement abandonné. Il reprendra avec l'arrivée du prochain fragment ou sera définitivement abandonné si cet événement n'est pas intervenu au bout d'un temps correspondant à la différence maximale des temps d'acheminement des deux réseaux redondants.
A chaque transfert réussi de la charge marchande d'un dernier paquet d'un message, signalé par le drapeau E (93 Figure 3) dans une pile de la mémoire courrier (114 figure 1), le processus de ré-assemblage signale que la pile utilisée de la mémoire courrier renferme un message complet à disposition de l'équipement.
Le descripteur de message est fermé (mise à l'état non alloué du drapeau de l'élément d'allocation le désignant) lorsque le pointeur du paquet redondant associé au dernier paquet du message est présent dans sa pile ou lorsqu'un délai supérieur au temps correspondant à la différence maximale admise entre les temps d'acheminement des deux réseaux est écoulé ou encore, lorsqu'un nouveau message est reçu avec la même adresse de destination finale dans l'équipement.
La détection de telles situations est faite par une tâche de fond parcourant périodiquement les entêtes des descripteurs alloués et comparant le champ "date du dernier paquet reçu" avec la date courante. Cette tâche de fond met également à jour le drapeau A (88 figure 3).

La figure 6 est un diagramme de temps montrant la détermination des statuts des pointeurs de paquets d'un descripteur du tableau de descripteur de message au cours du processus de recensement des paquets nouvellement reçus et les modifications éventuelles de ces statuts au cours du processus de réassemblage dans le cas d'un début message fragmenté parvenant à l'équipement à la fois par le réseau de communication par paquets Na et par le réseau de communication par paquets Nb.
Les paquets correspondant aux fragments du message sont expédiés, à la suite, dans l'ordre naturel des fragments, par deux chemins virtuels indépendants empruntant l'un le réseau de transmission Na et l'autre le réseau de transmission Nb et reçus, en parallèle, de façons totalement indépendantes et asynchrones, par les deux circuits analogiques de réception (110, 11 figure 1) de l'équipement. Sur la figure 6, les paquets reçus par l'équipement, correspondant aux cinq premiers fragments du même message, sont schématisés par des ronds indexés par un chiffre correspondant à leur rang dans le message. Ces ronds sont disposés sur deux lignes parallèles à l'échelle de temps: une première ligne correspondant aux paquets acheminés par le réseau de transmission Na et une deuxième ligne correspondant aux paquets acheminés par le réseau de transmission Nb. La situation représentée est celle d'un réseau de transmission Na offrant aux paquets du message des délais d'acheminement plus courts que le réseau de transmission Nb mais ayant perdu le paquet correspondant au troisième fragment du message qui arrive cependant par le réseau de transmission Nb, en retard sur le paquet correspondant au quatrième fragment de message acheminé par le réseau de transmission Na.
Dans le processus de recensement des paquets nouvellement reçus, l'ensemble de ces paquets se voient allouer, dans la table de descripteurs de message, des pointeurs provenant de la pile d'un même descripteur. Les paquets reçus du réseau de transmission Na ont leurs pointeurs affectés du statut intermédiaire d'éligible E, puisqu'ils sont arrivés les premiers à l'équipement. Les deux premiers paquets reçus du réseau Nb ont leurs pointeurs affectés du statut intermédiaire de redondant puisqu'ils étaient déjà parvenus à l'équipement par le réseau de transmission Na. Le troisième paquet n'est pas transmis intègre par le réseau de transmission Na, ce qui est montré sur la figure 6 par le fait qu'il est barré par une croix, mais il parvient quand même à l'équipement par le réseau de transmission Nb. Il est affecté sur le réseau Nb d'un statut intermédiaire d'éligible puisqu'il est le premier à parvenir à l'équipement. Les paquets suivants étant transmis sans omission par les deux réseaux de transmission Na et Nb, avec une avance du réseau de transmission Na sur le réseau de transmission Nb, voient leurs pointeurs affectés pour les paquets en provenance du réseau de transmission Na du statut intermédiaire d'éligible E et pour les paquets en provenance du réseau de transmission Nb du statut intermédiaire de redondant R.
Dans le processus de réassemblage, les deux premiers paquets provenant du réseau de transmission Na ont leurs charges marchandes transférées de la mémoire de travail (113 figure 1) à la mémoire courrier (114 figure 1) et voient le statut de leurs pointeurs passer du statut intermédiaire d'éligible à celui définitif de déposé tandis que les deux premiers paquets en provenance du réseau de transmission Nb, considérés comme redondants, sont écartés et voient le statut de leurs pointeurs passer du statut intermédiaire de redondant à celui définitif de refusé. Le quatrième paquet en provenance du réseau de transmission Na voit son transfert refusé et son pointeur passer d'intermédiaire d'éligible au statut intermédiaire d'éligible prématuré (E⇒P) puisque le troisième paquet manque au moment de sa première prise en compte. Le troisième paquet en provenance du réseau de transmission Nb est transféré à son tour dans la mémoire courrier à la suite des deux premiers paquets, son pointeur passant du statut intermédiaire d'éligible à celui définitif de déposé.
La recherche de pointeurs au statut intermédiaire d'éligible prématuré entamée vers l'amont dans la pile de pointeurs à la suite du transfert du troisième paquet ayant fait ressortir un pointeur pointant sur un quatrième paquet en provenance du réseau de transmission Na, conduit à une remise en cause du statut intermédiaire d'éligible prématuré de ce pointeur qui est changé en statut intermédiaire d'éligible (P⇒E) puisque le troisième paquet vient d'être transféré et qu'il devient le prochain paquet à transférer. Son transfert a alors lieu (E⇒D) suivi du cinquième paquet en provenance du réseau de transmission Na et ainsi de suite.
Dans l'exemple qui vient d'être décrit relativement à la figure 6, les processus de recensement et de réassemblage favorisent la reconstitution d'un message à partir des paquets transmis par le réseau de transmission Na, les paquets transmis par le réseau de transmission Nb n'étant utilisés que pour pallier des défauts dans la transmission des paquets de la part du réseau Na. C'est souvent le cas en pratique, lorsque, pour des raisons de sécurité, un message est transmis en parallèle par deux réseaux de transmission car l'un est souvent considéré comme réseau de transmission principal pour le message en cause et l'autre comme un réseau de transmission auxiliaire, le réseau de transmission principal consacrant à l'acheminement du message un chemin virtuel de meilleures performances en délai d'acheminement et de gigue que le réseau de transmission auxiliaire. Il est cependant possible de faire adopter par le processus de réassemblage, d'autres critères pour le choix de la version du paquet dont la charge marchande est transférée dans une pile de la mémoire courrier, lorsque plusieurs versions du même paquet sont disponibles en réception de plusieurs réseaux de transmission. Ces critères peuvent inclure une préférence d'un réseau de transmission particulier pour un message donné puisque les pointeurs de paquet des piles des descripteurs de la table de descripteurs de message renferment un champ d'informations donnant le réseau de transmission utilisé par le paquet pointé. Ils peuvent aussi être minimalistes et n'inclure aucune préférence de réseau de transmission.

Le traitement subit par les paquets d'un message fragmenté parvenant à un équipement, de manière redondante par deux réseaux de transmission indépendants Na et Nb est résumé dans le diagramme de la figure 7. Les paquets acheminés à l'équipement par chacun des deux réseaux de transmission Na et Nb sont reçus par l'équipement sur des entrées distinctes spécialisées par réseau de transmission et traités par des circuits analogiques de réception (PHY a, PHY b figure 1) assurant le contrôle de leur intégrité et leur mise sous forme binaire. Une fois sous forme binaire, ils sont stockés provisoirement dans une mémoire de travail dans l'attente d'avoir leurs champs d'informations de service exploités pour connaître la nature, la validité et la destination de leur charge marchande. Les paquets originaires de chacun des deux réseaux de transmission Na et Nb, subissent, après avoir été mis sous forme binaire, un filtrage de protocole 500, respectivement 600 qui consiste à vérifier qu'ils ont un format vérifiant soit les protocoles MAC/IP/UDP, soit les protocoles MAC/IP/TCP. Le franchissement avec succès d'un filtre de protocole 500 ou 600 par un paquet implique que ses champs d'informations de service ont livré la destination du paquet dans l'équipement (numéro de port) et l'identité du message dont se revendique le paquet. L'identité du message auquel appartient le paquet est utilisée pour une recherche 501, 601, dans une table de descripteurs de message, d'un descripteur alloué à son message. Si la table de descripteurs ne contient pas de descripteur alloué au message d'appartenance du paquet nouvellement reçu en cours d'analyse, il en est créé un en 502, 602. Si la table de descripteurs contient un descripteur alloué au message d'appartenance du paquet nouvellement reçu en cours d'analyse ou après création d'un tel descripteur, le paquet nouvellement reçu en cours d'analyse est recensé dans la pile de pointeurs du descripteur de son message d'appartenance en lui allouant en 700, le premier pointeur libre de la pile avec un statut signalant les doublons (statut intermédiaire de redondant). Simultanément, les piles de pointeurs alloués, dans la table de descripteurs de message, à des paquets nouvellement reçus sont systématiquement analysées, en 701, dans le même sens que leurs écritures, pour réassembler les messages fragmentés en plusieurs paquets, le réassemblage consistant, pour chaque message à extraire la charge marchande des paquets stockés en mémoire de travail (113 figure 1) et pointés par les pointeurs de la pile du descripteur du message, dans l'ordre donné par la pile tant qu'il n'y a pas de manquement à l'ordonnancement naturel des fragments du message ou de doublon, à rechercher à replacer dans le bon ordonnancement la charge marchande d'un paquet pointé par un pointeur affecté d'un statut d'éligible prématuré en retardant le moment de sa prise en compte jusqu'à ce que ce statut devienne injustifié et à ignorer les doublons sauf en cas d'insuccès des extractions des charges marchandes des paquets qu'ils doublent.
Diverses variantes peuvent être apportées au mode de réalisation qui vient d'être décrit. Notamment, la table d'éléments d'allocation de descripteurs peut être supprimée à la condition de faire figurer dans les blocs entête des descripteurs de message de la tables de descripteurs de message un drapeau consacré à leur état alloué ou non. La suppression de la table d'éléments d'allocation implique que la recherche d'un descripteur alloué au message d'appartenance d'un paquet ne se fait plus en deux étapes mais en une seule, son domaine n'étant plus limité aux seuls descripteurs alloués mais étendu à tous les descripteurs de la table alloué ou non.

## Revendications

1. Procédé de reconstitution de messages fragmentés en paquets, acheminés vers un équipement (1), par au moins un réseau de transmission par paquets (Na, Nb), chaque paquet comportant une charge marchande de données constituant un fragment de message et des informations de service concernant l'adresse d'un port de réception de l'équipement destinataire, l'identité du message auquel il appartient et sa position relative dans un tel message, ledit procédé étant **caractérisé en ce qu'**il comporte un processus de recensement des paquets mis à disposition de l'équipement (1) par ledit réseau de transmission (Na, Nb) et un processus de réassemblage de message à partir des paquets recensés par le processus de recensement qui mettent en oeuvre une table de pointeurs de paquets pointant les paquets mis à disposition de l'équipement (1) par ledit réseau de transmission (Na, Nb), triés par message d'appartenance, lesdits pointeurs de paquets étant mis, pour chaque message d'appartenance, dans une pile (9) selon l'ordre de mis à disposition de l'équipement (1) des paquets qu'ils pointent et pourvus de champs additionnels d'informations ou statut (94) signalant doublons, divergences entre l'ordre de mis à disposition des paquets d'une pile et l'ordre naturel des fragments de message constitués par les charges marchandes des paquets, et le sort du paquet pointé au cours du processus de réassemblage.

2. Procédé selon la revendication 1, **caractérisé en ce que** les pointeurs de paquets renferment un champ additionnel d'informations réservé à une signalisation indiquant si le paquet pointé est le dernier d'un message.

3. Procédé selon la revendication 1, **caractérisé en ce que** les pointeurs de paquets renferment un champ additionnel d'informations réservé à l'identification du réseau de communication de provenance du paquet pointé.

4. Procédé selon la revendication 1, **caractérisé en ce que** la table de pointeurs de paquets est organisée en descripteurs de message (8,9), chaque descripteur de message contenant une pile (9) de pointeurs de paquets pouvant être allouée à un message particulier.

5. Procédé selon la revendication 4, **caractérisé en ce que** chaque descripteur de message (8, 9) comporte, en plus d'une pile (9) de pointeurs, un bloc entête (8) contenant des informations de service relatives à l'identité du message auquel est allouée sa pile de pointeurs, à l'adresse de destination du message auquel est allouée sa pile (9) de pointeurs, à la gestion du fonctionnement de sa pile de pointeurs et à l'état de réassemblage du message.

6. Procédé selon la revendication 4, **caractérisé en ce que** la table de pointeurs de paquets est accompagnée d'une table d'allocation de descripteurs de message répertoriant les descripteurs de message (8, 9) de la table de pointeurs de paquets en cours d'allocation à des messages.

7. Procédé selon la revendication 1, mis en oeuvre avec des paquets dont le champ d'informations de service renseigne également sur leur longueur, **caractérisé en ce qu'**il comporte les étapes suivantes :
- stockage, dans un premier espace de mémoire de travail (113), des paquets provenant des réseaux de transmission par paquets (Na, Nb),
- création, dans un deuxième espace de mémoire de travail (113), d'une table formée de N descripteurs, N étant un entier positif, allouables à des messages en cours de reconstitution et d'une table d'éléments d'allocation de descripteurs, chaque descripteur comportant :
- une pile de M pointeurs (9), M étant un entier positif, allouables à des paquets stockés dans le premier espace de mémoire de travail (113), chaque pointeur (9) de paquets renfermant une partie (91) réservée à l'adresse, dans le premier espace de mémoire de travail (113), du paquet qui lui est alloué, une partie (94) réservée à un statut précisant la situation, dans l'instant, du paquet alloué, au cours du déroulement d'une opération de reconstitution de message, et
- un bloc entête (8) avec des informations de service concernant l'identification du message alloué au descripteur (100), la position, dans la pile de pointeurs de paquet du descripteur, du premier pointeur disponible de la pile à allouer (80), la position maximale attendue du prochain paquet à réassembler dans le message autorisant un chaînage avec le dernier paquet réassemblé au message,
chaque élément d'allocation de descripteur désignant un descripteur en lui associant un drapeau (202) signalant l'état alloué ou non du descripteur désigné,
- analyse des informations de service de chaque paquet nouvellement arrivé à l'équipement, pour en extraire l'identité (66) du message dont il fait partie et le port de réception destinataire (52, 65, 71) de ce message au sein de l'équipement (1),
- recherche dans la table de descripteurs, à l'aide de la table d'élément d'allocation, d'un descripteur de message attribué au message identifié dans les informations de service du paquet (66),
en l'absence de descripteur alloué :
- allocation d'un descripteur disponible de la table au message identifié dans les informations de service du paquet (66) et mise à jour de la table d'éléments d'allocation,
- allocation au paquet, du premier pointeur disponible de la pile (9) du descripteur nouvellement attribué avec un statut intermédiaire d'éligible, et
- mise à jour du bloc entête (8) du descripteur,
- allocation au paquet, du premier pointeur disponible de la pile (9) du descripteur,
- comparaison du paquet avec ceux correspondant aux pointeurs déjà alloués de la pile (9) du descripteur,
en présence d'un pointeur déjà alloué pointant sur un paquet ayant la même position dans le message,
- affectation au pointeur alloué au paquet d'un statut intermédiaire de redondant,
en l'absence d'un pointeur déjà alloué pointant sur un paquet ayant la même position dans le message,
- affectation au pointeur alloué au paquet d'un statut intermédiaire d'éligible,
- analyse répétitive, en tâche de fond, des piles de pointeurs (8) des descripteurs de la table effectivement alloués à des messages pour retirer du premier espace de la mémoire de travail (113), dans le bon ordre, sans répétition ni omission, tous les paquets de chaque message en cours de réception et transférer leurs charges marchandes à une pile de reconstitution de message, cette analyse consistant, au niveau d'une pile de pointeurs (8) de descripteur,
- à prendre en considération dans la pile (8), par ordre d'ancienneté décroissante, les pointeurs effectivement alloués à des paquets, en recherchant le premier possédant le statut intermédiaire d'éligible (401),
si la position relative dans le message, du paquet pointé, extraite des champs d'informations de service (66) de ce paquet est inférieure ou égale à la position maximale de chaînage (101) inscrite dans le bloc entête (8) du descripteur
- à déposer dans une pile de reconstitution de message, la charge marchande du paquet pointé,
- à mettre à jour, dans le bloc entête (8) du descripteur, la position maximale de chaînage (101) en augmentant sa valeur de la longueur de la charge marchande déposée, et
- à passer au pointeur suivant de la pile,
si la position relative dans le message, du paquet pointé, extraite des champs d'informations de service (66) du paquet pointé est supérieure à la position maximale de chaînage (101) inscrite dans le bloc entête (8) du descripteur
- à affecter le pointeur du statut intermédiaire d'éligible prématuré(403), et
- à passer au pointeur suivant de la pile
dès qu'un dépôt a été mené à bien
- à changer le statut intermédiaire d'éligible (401) ou d'éligible prématuré (403) du pointeur alloué au paquet déposé en un statut définitif de déposé (404),
- à examiner si la position relative dans le message, du paquet déposé est la dernière du message (68)
Si le paquet déposé est le dernier d'un message
- à fermer la pile de reconstitution de message, et
- à désactiver le descripteur alloué au message en mettant à jour la table d'éléments d'allocation,
Si le paquet déposé n'est pas le dernier d'un message
- à changer le statut du ou des pointeurs alloués à des paquets et placés immédiatement en aval dans la pile avec un statut intermédiaire de redondant (402) en statut définitif de redondant,
- à rechercher, en amont de la pile, les pointeurs alloués à des paquets avec le statut intermédiaire d'éligible prématuré (403), et
- lorsque cette recherche est positive, à vérifier la réalité du statut intermédiaire d'éligible prématuré (403) en comparant la position relative dans le message, du paquet pointé, extraite des champs d'informations de service (66) du paquet pointé avec la position maximale de chaînage (01) figurant dans le bloc entête (8) du descripteur,
Si la position relative dans le message, du paquet pointé par un pointeur au statut intermédiaire d'éligible prématuré (403) est inférieure à la position maximale de chaînage calculée à partir du paquet déposé,
- à changer le statut intermédiaire d'éligible prématuré (403) en statut intermédiaire d'éligible (401), et
- à reprendre l'analyse de la pile au niveau du pointeur alloué ayant subi le changement de statut,
dès qu'un dépôt échoue
- à changer le statut d'un pointeur alloué paquet dont le dépôt à échouer, de statut intermédiaire d'éligible (401) en statut définitif de refusé (405),
- à rechercher dans la pile un autre pointeur alloué correspondant au paquet dont le dépôt a échoué mais affecté d'un statut intermédiaire de redondant (402),
si la recherche est positive
- à changer le statut du pointeur trouvé, d'intermédiaire redondant (402) en intermédiaire éligible (401), et
- à reprendre l'analyse de la pile de pointeur, au niveau du pointeur alloué ayant subi le changement de statut,
si la recherche est négative
- à abandonner momentanément la reconstruction du message en mémoire de courrier (114), cette reconstruction étant reprise naturellement à l'arrivée d'un paquet correspondant à un prochain fragment.

8. Procédé selon la revendication 7, **caractérisé en ce qu'**un descripteur de message (8, 9) est désalloué en cas de réception par l'équipement d'un paquet appartenant à un nouveau message ayant la même adresse finale de destination que son message d'allocation.

9. Procédé selon la revendication 7, appliqué dans le cadre de messages transmis de façon redondante par plusieurs réseaux de transmission (Na, Nb), **caractérisé en ce qu'**un descripteur (8, 9) n'est désalloué, après dépôt du dernier paquet d'un message, qu'une fois reçus les paquets redondants correspondant à ce dernier paquet de message ou qu'une fois dépassé un délai correspondant à la différence maximale admissible entre les temps d'acheminement des réseaux de transmission pour le message considéré.

10. Procédé selon la revendication 7, appliqué dans le cadre de descripteurs ayant des piles de pointeurs rebouclées sur elles-mêmes, **caractérisé en ce qu'**il comporte en outre une étape de vérification du statut définitif (404, 405) des pointeurs de pile (8) de descripteur lorsqu'ils sont écrasés par l'allocation d'un nouveau pointeur, une signalisation d'erreur étant produite lorsqu'un pointeur écrasé possède un statut intermédiaire.

## Patentansprüche

1. Verfahren zur Wiederherstellung von in Paketen fragmentierten Nachrichten, die zu einer Einrichtung (1) über mindestens ein Netz (Na, Nb) zur paketweisen Übertragung transportiert werden, wobei jedes Paket eine Nutzlast von Daten, die ein Nachrichtenfragment bilden, und Dienstinformationen enthält, die die Adresse eines Empfangsports der Zieleinrichtung, die Identität der Nachricht, zu der es gehört, und seine relative Position in einer solchen Nachricht betreffen, wobei das Verfahren **dadurch gekennzeichnet ist, dass** es einen Prozess der Erfassung der Pakete, die vom Übertragungsnetz (Na, Nb) der Einrichtung (1) zur Verfügung gestellt werden, und einen Prozess der Nachrichten-Wiederzusammensetzung, ausgehend von den vom Erfassungsprozess erfassten Paketen enthält, die eine Tabelle von Paketzeigern implementieren, die die der Einrichtung (1) vom Übertragungsnetz (Na, Nb) zur Verfügung gestellten Pakete bezeichnen, die gemäß Zugehörigkeitsnachrichten sortiert sind, wobei die Paketzeiger für jede Zugehörigkeitsnachricht in der Reihenfolge, in der die Pakete, die sie bezeichnen, der Einrichtung (1) zur Verfügung gestellt werden, in einen Stapel (9) gebracht werden, und mit zusätzlichen Informations- oder Statusfeldern (94) versehen sind, die Dubletten, Abweichungen zwischen der Reihenfolge der Zurverfügungstellung der Pakete eines Stapels und der natürlichen Ordnung der Nachrichtenfragmente, die aus den Nutzlasten der Pakete bestehen, und das Schicksal des bezeichneten Pakets während des Wiederzusammensetzens anzeigen.

2. Verfahren nach Anspruch 1, **dadurch gekennzeichnet, dass** die Paketzeiger ein zusätzliches Informationsfeld einschließen, das für eine Signalisierung reserviert ist, die angibt, ob das bezeichnete Paket das letzte einer Nachricht ist.

3. Verfahren nach Anspruch 1, **dadurch gekennzeichnet, dass** die Paketzeiger ein zusätzliches Informationsfeld einschließen, das für die Identifizierung des Herkunfts-Kommunikationsnetzes des bezeichneten Pakets reserviert ist.

4. Verfahren nach Anspruch 1, **dadurch gekennzeichnet, dass** die Paketzeigertabelle in Nachrichten-Deskriptoren (8, 9) organisiert ist, wobei jeder Nachrichten-Deskriptor einen Stapel (9) von Paketzeigern enthält, der einer bestimmten Nachricht zugeordnet werden kann.

5. Verfahren nach Anspruch 4, **dadurch gekennzeichnet, dass** jeder Nachrichten-Deskriptor (8, 9) zusätzlich zu einem Zeigerstapel (9) einen Vorspannblock (8) aufweist, der Dienstinformationen bezüglich der Identität der Nachricht, der sein Zeigerstapel zugeordnet ist, der Zieladresse der Nachricht, der sein Zeigerstapel (9) zugeordnet ist, der Verwaltung des Betriebs seines Zeigerstapels und des Wiederzusammensetzungszustands der Nachricht enthält.

6. Verfahren nach Anspruch 4, **dadurch gekennzeichnet, dass** zur Paketzeigertabelle eine Nachrichten-Deskriptor-Zuteiltabelle gehört, die diejenigen Nachrichten-Deskriptoren (8, 9) der Paketzeigertabelle auflistet, die gerade Nachrichten zugeteilt werden.

7. Verfahren nach Anspruch 1, das mit Paketen implementiert wird, deren Dienstinformationsfeld auch über ihre Länge informiert, **dadurch gekennzeichnet, dass** es die folgenden Schritte aufweist:
- Speichern von Paketen, die von den Netzen (Na, Nb) der paketweisen Übertragung stammen, in einem ersten Arbeitsspeicherbereich (113),
- Erzeugen einer Tabelle von N Deskriptoren, wobei N eine positive ganze Zahl ist, die Nachrichten zugewiesen werden können, die gerade wiederhergestellt werden, und einer Tabelle von Deskriptor-Zuweisungselementen in einem zweiten Arbeitsspeicherbereich (113), wobei jeder Deskriptor aufweist:
- einen Stapel von M Zeigern (9), wobei M eine positive ganze Zahl ist, die Paketen zugewiesen werden können, die im ersten Arbeitsspeicherbereich (113) gespeichert sind, wobei jeder Paketzeiger (9) einen für die Adresse des ihm zugewiesenen Pakets reservierten Teil (91) im ersten Arbeitsspeicherbereich (113) und einen Teil (94) umschließt, der für einen die augenblickliche Situation des zugewiesenen Pakets während des Ablaufs eines Nachrichtenwiederherstellungsvorgangs kennzeichnenden Status reserviert ist, und
- einen Vorspannblock (8) mit Dienstinformationen, betreffend die Identifizierung der dem Deskriptor zugewiesenen Nachricht (100), die Position des ersten verfügbaren Zeigers des zuzuordnenden Stapels (80) im Paketzeigerstapel des Deskriptors, die maximale erwartete Position des nächsten wiederzusammenzusetzenden Pakets in der Nachricht, die eine Verkettung mit dem letzten wiederzusammengesetzten Paket der Nachricht erlaubt,
wobei jedes Deskriptor-Zuweisungselement einen Deskriptor bezeichnet, indem es ihm einen Marker (202) zuordnet, der den zugewiesenen oder nicht zugewiesenen Zustand des bezeichneten Deskriptors anzeigt,
- Analyse der Dienstinformationen jedes neu in der Einrichtung angekommenen Pakets, um daraus die Identität (66) der Nachricht, von der es ein Teil ist, und den Zielempfangsport (52, 65, 71) dieser Nachricht innerhalb der Einrichtung (1) zu entnehmen,
- Suche in der Deskriptor-Tabelle mit Hilfe der Tabelle von Zuweisungselementen nach einem Nachrichten-Deskriptor, der der in den Dienstinformationen des Pakets (66) identifizierten Nachricht zugeteilt ist,
in Abwesenheit eines zugewiesenen Deskriptors:
- Zuweisung eines verfügbaren Deskriptors der Tabelle zur identifizierten Nachricht in den Dienstinformationen des Pakets (66) und Aktualisierung der Tabelle von Zuweisungselementen,
- Zuweisung zum Paket des ersten verfügbaren Zeigers des Stapels (9) des neu zugeteilten Deskriptors mit einem Wählbar-Zwischenstatus, und
- Aktualisierung des Vorspannblocks (8) des Deskriptors,
- Zuweisung zum Paket des ersten verfügbaren Zeigers des Stapels (9) des Deskriptors,
- Vergleich des Pakets mit denjenigen, die den bereits zugewiesenen Zeigern des Stapels (9) des Deskriptors entsprechen,
in Gegenwart eines bereits zugewiesenen Zeigers, der ein Paket bezeichnet, das die gleiche Position in der Nachricht hat,
- Zuordnung eines Redundanz-Zwischenstatus zum dem Paket zugewiesenen Zeiger,
in Abwesenheit eines bereits zugewiesenen Zeigers, der ein Paket bezeichnet, das die gleiche Position in der Nachricht hat,
- Zuordnung eines Wählbar-Zwischenstatus zum dem Paket zugewiesenen Zeiger,
- wiederholte Analyse, als Hintergrundprogramm, der Stapel von Zeigern (8) der Deskriptoren der Tabelle, die tatsächlich Nachrichten zugewiesen sind, um aus dem ersten Bereich des Arbeitsspeichers (113) in der richtigen Reihenfolge ohne Wiederholung oder Weglassen alle Pakete jeder Nachricht zu entnehmen, die gerade empfangen wird, und ihre Nutzlasten zu einem Stapel zur Nachrichtenwiederherstellung zu übertragen, wobei diese Analyse in Höhe eines Stapels von Deskriptor-Zeigern (8) besteht aus
- der Berücksichtigung im Stapel (8), in abnehmender Dienstaltersreihenfolge, der tatsächlich Paketen zugewiesenen Zeiger, indem der erste gesucht wird, der den Wählbar-Zwischenstatus (401) aufweist,
wenn die relative Position des bezeichneten Pakets in der Nachricht, die aus den Dienstinformationsfeldern (66) dieses Pakets entnommen wurde, geringer als die oder gleich der maximalen Verkettungsposition (101) ist, die in den Vorspannblock (8) des Deskriptors eingeschrieben ist,
- Deponieren der Nutzlast des bezeichneten Pakets in einen Nachrichtenwiederherstellungsstapel,
- Aktualisieren der maximalen Verkettungsposition (101) im Vorspannblock (8) des Deskriptors durch Erhöhen ihres Werts um die Länge der deponierten Nutzlast, und
- Übergang zum nächsten Zeiger des Stapels, wenn die relative Position des bezeichneten Pakets in der Nachricht, die aus den Dienstinformationsfeldern (66) des bezeichneten Pakets entnommen wird, größer ist als die maximale Verkettungsposition (101), die in den Vorspannblock (8) des Deskriptors eingeschrieben ist
- Zuordnen des Vorzeitig-Wählbar-Zwischenstatus (403) zum Zeiger, und
- Übergang zum nächsten Zeiger des Stapels, sobald ein Depot erfolgreich durchgeführt wurde
- Ändern des Wählbar-Zwischenstatus (401) oder des Vorzeitig-Wählbar-Zwischenstatus (403) des dem deponierten Paket zugewiesenen Zeigers in einen endgültigen Depotstatus (404),
- Prüfen, ob die relative Position des deponierten Pakets in der Nachricht die letzte der Nachricht ist (68),
wenn das deponierte Paket das letzte einer Nachricht ist
- Schließen des Nachrichtenwiederherstellungsstapels, und
- Deaktivieren des der Nachricht zugewiesenen Deskriptors, indem die Tabelle von Zuweisungselementen aktualisiert wird,
wenn das deponierte Paket nicht das letzte einer Nachricht ist
- Ändern des Status des oder der Paketen zugewiesenen Zeiger, die direkt stromabwärts hinten im Stapel mit einem Redundanz-Zwischenstatus angeordnet sind (402), in einen endgültigen Redundanz-Status,
- Suchen stromaufwärts vorne im Stapel der Zeiger, die Paketen mit dem Vorzeitig-Wählbar-Zwischenstatus (403) zugewiesen sind, und
- wenn diese Suche positiv ist, Prüfen der Wirklichkeit des Vorzeitig-Wählbar-Zwischenstatus (403), indem die relative Position des bezeichneten Pakets in der Nachricht, die aus den Dienstinformationsfeldern (66) entnommen wird, mit der maximalen Verkettungsposition (101) verglichen wird, die sich im Vorspannblock (8) des Deskriptors befindet,
wenn die relative Position des von einem Zeiger im Vorzeitig-Wählbar-Zwischenstatus (403) bezeichneten Pakets in der Nachricht unter der maximalen Verkettungsposition liegt, die ausgehend vom deponierten Paket berechnet wurde,
- Ändern des Vorzeitig-Wählbar-Zwischenstatus (403) in einen Wählbar-Zwischenstatus (401), und
- Wiederaufnahme der Analyse des Stapels in Höhe des zugewiesenen Zeigers, dessen Status geändert wurde,
sobald ein Depot fehlschlägt
- Ändern des Status eines einem Paket zugewiesenen Zeigers, dessen Depot fehlgeschlagen ist, von einem Wählbar-Zwischenstatus (401) in einen endgültigen Zurückgewiesen-Status (405),
- Suchen im Stapel nach einem anderen zugewiesenen Zeiger, der dem Paket entspricht, dessen Depot fehlgeschlagen ist, dem aber ein Redundant-Zwischenstatus (402) zugeordnet ist,
wenn die Suche positiv ist
- Ändern des Status des gefundenen Zeigers vom Redundant-Zwischenstatus (402) zum Wählbar-Zwischenstatus (401), und
- Wiederaufnahme der Analyse des Zeigerstapels in Höhe des zugewiesenen Zeigers, dessen Status geändert wurde,
wenn die Suche negativ ist
- momentanes Aufgeben der Wiederherstellung der Nachricht im Postspeicher (114), wobei diese Wiederherstellung natürlich bei Ankunft eines einem folgenden Fragment entsprechenden Pakets wieder aufgenommen wird.

8. Verfahren nach Anspruch 7, **dadurch gekennzeichnet, dass** die Zuweisung eines Nachrichten-Deskriptors (8, 9), wenn die Einrichtung ein Paket empfängt, das zu einer neuen Nachricht mit der gleichen Endzieladresse wie seine Zuweisungsnachricht gehört, aufgehoben wird.

9. Verfahren nach Anspruch 7, das im Rahmen von Nachrichten angewendet wird, die von mehreren Übertragungsnetzen (Na, Nb) redundant übertragen werden, **dadurch gekennzeichnet, dass** die Zuweisung eines Deskriptors (8, 9) nach dem Depot des letzten Pakets einer Nachricht erst aufgehoben wird, wenn die diesem letzten Paket der Nachricht entsprechenden redundanten Pakete empfangen wurden oder wenn eine Frist entsprechend der maximal zulässigen Differenz zwischen den Transportzeiten der Übertragungsnetze für die betroffene Nachricht überschritten wurde.

10. Verfahren nach Anspruch 7, das im Rahmen von Deskriptoren angewendet wird, die auf sich selbst zurückgeschleifte Stapel von Zeigern aufweisen, **dadurch gekennzeichnet, dass** es außerdem einen Schritt der Prüfung des endgültigen Status (404, 405) der Deskriptor-Stapelzeiger (8) aufweist, wenn sie durch die Zuweisung eines neuen Zeigers überschrieben werden, wobei eine Fehleranzeige erzeugt wird, wenn ein überschriebener Zeiger einen Zwischenstatus besitzt.

## Claims

1. Method of reconstituting messages fragmented into packets, conveyed to an item of equipment (1), by at least one packet-switching transmission network (Na, Nb), each packet comprising a data payload constituting a message fragment and service information relating to the address of a reception port of the destination item of equipment, the identity of the message to which it belongs and its relative position in such a message, the said method being **characterized in that** it comprises a process for cataloguing the packets made available to the item of equipment (1) by the said transmission network (Na, Nb) and a process for message reassembly on the basis of the packets catalogued by the cataloguing process which implement a table of packet pointers pointing to the packets made available to the item of equipment (1) by the said transmission network (Na, Nb), sorted by membership message, the said packet pointers being placed, for each membership message, in a stack (9) according to the order in which the packets that they point at are made available to the item of equipment (1) and provided with additional information or status fields (94) signalling doubles, discrepancies between the order in which the packets of a stack are made available and the natural order of the message fragments constituted by the payloads of the packets, and the fate of the packet pointed at in the course of the reassembly process.

2. Method according to Claim 1, **characterized in that** the packet pointers enclose an additional information field reserved for signalling indicating whether the packet pointed at is the last of a message.

3. Method according to Claim 1, **characterized in that** the packet pointers enclose an additional information field reserved for the identification of the communication network from which the packet pointed at originates.

4. Method according to Claim 1, **characterized in that** the table of packet pointers is organized as message descriptors (8, 9), each message descriptor containing a packet pointer stack (9) that can be allocated to a particular message.

5. Method according to Claim 4, **characterized in that** each message descriptor (8, 9) comprises, in addition to a stack (9) of pointers, a header block (8) containing service information relating to the identity of the message to which its stack of pointers is allocated, to the destination address of the message to which its stack (9) of pointers is allocated, to the management of the operation of its stack of pointers and to the state of reassembly of the message.

6. Method according to Claim 4, **characterized in that** the table of packet pointers is accompanied by a message descriptors allocation table listing the message descriptors (8, 9) of the table of packet pointers currently being allocated to messages.

7. Method according to Claim 1, implemented with packets whose service information field also advises with regard to their length, **characterized in that** it comprises the following steps:
- storage, in a first work memory space (113), of the packets originating from the packet-switching transmission networks (Na, Nb),
- creation, in a second work memory space (113), of a table made up of N descriptors, N being a positive integer, that are able to be allocated to messages currently being reconstituted and of a table of descriptor allocation elements, each descriptor comprising:
- a stack of M pointers (9), M being a positive integer, that are able to be allocated to packets stored in the first work memory space (113), each packet pointer (9) enclosing a part (91) reserved for the address, in the first work memory space (113), of the packet which is allocated to it, a part (94) reserved for a status specifying the situation, at the moment, of the packet allocated, in the course of the running of a message reconstitution operation, and
- a header block (8) with service information relating to the identification of the message allocated to the descriptor (100), the position, in the stack of packet pointers of the descriptor, of the first available pointer of the stack to be allocated (80), the maximum expected position of the next packet to be reassembled in the message permitting chaining with the last packet reassembled to the message,
each descriptor allocation element designating a descriptor by associating therewith a flag (202) signalling the state, allocated or otherwise, of the designated descriptor,
- analysis of the service information of each packet newly arrived at the item of equipment, so as to extract therefrom the identity (66) of the message of which it forms part and the destination reception port (52, 65, 71) of this message within the item of equipment (1),
- search through the table of descriptors, with the aid of the allocation element table, for a message descriptor allotted to the message identified in the service information of the packet (66),
in the absence of any allocated descriptor:
- allocation of an available descriptor of the table to the message identified in the service information of the packet (66) and updating of the table of allocation elements,
- allocation to the packet, of the first available pointer of the stack (9) of the descriptor newly allotted with an eligible intermediate status, and
- updating of the header block (8) of the descriptor,
- allocation to the packet, of the first available pointer of the stack (9) of the descriptor,
- comparison of the packet with those corresponding to the already allocated pointers of the stack (9) of the descriptor,
- in the presence of an already allocated pointer pointing to a packet having the same position in the message,
- assignment to the pointer allocated to the packet of a redundant intermediate status,
in the absence of an already allocated pointer pointing to a packet having the same position in the message,
- assignment to the pointer allocated to the packet of an eligible intermediate status,
- repetitive analysis, as a background task, of the stacks of pointers (8) of the descriptors of the table that are actually allocated to messages so as to remove from the first space of the work memory (113), in the right order, without repetition or omission, all the packets of each message currently being received and to transfer their payloads to a message reconstitution stack, this analysis consisting, at the level of a stack of descriptor pointers (8),
- in taking into consideration in the stack (8), in descending age order, the pointers actually allocated to packets, by searching for the first possessing the eligible intermediate status (401),
if the relative position in the message, of the packet pointed at, which position is extracted from the service information fields (66) of this packet, is less than or equal to the maximum position of chaining (101) registered in the header block (8) of the descriptor,
- in depositing the payload of the packet pointed at into a message reconstitution stack,
- in updating, in the header block (8) of the descriptor, the maximum position of chaining (101) by increasing its value of the length of the payload deposited, and
- in going to the next pointer of the stack,
if the relative position in the message, of the packet pointed at, which position is extracted from the service information fields (66) of the packet pointed at, is greater than the maximum position of chaining (101) registered in the header block (8) of the descriptor,
- in assigning the pointer of the premature eligible intermediate status (403), and
- in going to the next pointer of the stack,
as soon as a deposit has been properly concluded,
- in changing the eligible intermediate status (401) or premature eligible intermediate status (403) of the pointer allocated to the packet deposited into a definitive deposited status (404),
- in examining whether the relative position in the message, of the packet deposited is the last of the message (68),
if the packet deposited is the last of a message,
- in closing the message reconstitution stack, and
- in deactivating the descriptor allocated to the message by updating the table of allocation elements,
if the packet deposited is not the last of a message,
- in changing the status of the pointer or pointers allocated to packets and placed immediately downstream in the stack with a redundant intermediate status (402) into a definitive redundant status,
- in searching, upstream of the stack, for the pointers allocated to packets with the premature eligible intermediate status (403), and
- when this search is positive, in verifying the reality of the premature eligible intermediate status (403) by comparing the relative position in the message, of the packet pointed at, which position is extracted from the service information fields (66) of the packet pointed at, with the maximum position of chaining (101) figuring in the header block (8) of the descriptor,
if the relative position in the message, of the packet pointed at by a pointer to the premature eligible intermediate status (403) is less than the maximum position of chaining calculated on the basis of the packet deposited,
- in changing the premature eligible intermediate status (403) into an eligible intermediate status (401), and
- in resuming the analysis of the stack at the level of the pointer allocated that has undergone the change of status,
as soon as a deposit fails
- in changing the status of a pointer - allocated packet whose deposit has failed, from eligible intermediate status (401) to a reject definitive status (405),
- in searching through the stack for another allocated pointer corresponding to the packet whose deposit has failed but assigned a redundant intermediate status (402),
if the search is positive,
- in changing the status of the pointer found, from redundant intermediate (402) to eligible intermediate (401), and
- in resuming the analysis of the pointer stack, at the level of the allocated pointer that has undergone the change of status,
if the search is negative,
- in momentarily abandoning the reconstruction of the message in mail memory (114), this reconstruction being resumed naturally upon the arrival of a packet corresponding to a next fragment.

8. Method according to Claim 7, **characterized in that** a message descriptor (8, 9) is deallocated in case of receipt by the item of equipment of a packet belonging to a new message having the same final destination address as its allocation message.

9. Method according to Claim 7, applied within the context of messages transmitted in a redundant manner by several transmission networks (Na, Nb), **characterized in that** a descriptor (8, 9) is deallocated, after depositing of the last packet of a message, only once the redundant packets corresponding to this latter message packet have been received or once a lag corresponding to the maximum allowable difference between the conveyance times of the transmission networks has been exceeded in respect of the message considered.

10. Method according to Claim 7, applied within the context of descriptors having pointer stacks looped back on themselves, **characterized in that** it furthermore comprises a step of verification of the definitive status (404, 405) of the descriptor stack pointers (8) when they are overwritten by the allocation of a new pointer, an error signalling being produced when an overwritten pointer possesses an intermediate status.
